# FASCICULE DE BREVET EUROPEEN

(11) **EP 4 359 655 B1**
(45) Date de publication et mention de la délivrance du brevet: **25.11.2026**
(21) Numéro de dépôt: 22733673.2
(22) Date de dépôt: 21.06.2022
(51) Int. Cl.: F02C 6/16

(54) **PROCÉDÉ DE STOCKAGE ET DE RÉCUPÉRATION D'ÉNERGIE AVEC STOCKAGE DE CHALEUR INDIRECT À LA COMPRESSION**
VERFAHREN ZUR SPEICHERUNG UND RÜCKGEWINNUNG VON ENERGIE MIT INDIREKTER WÄRMESPEICHERUNG BEI KOMPRESSION
METHOD FOR STORING AND RECOVERING ENERGY WITH INDIRECT HEAT STORAGE UPON COMPRESSION

(30) Priorité: 24.06.2021 FR 2106769
(43) Date de publication de la demande: 01.05.2024
(73) Titulaire: IFP Energies nouvelles, 92500 Rueil-Malmaison (FR)
(72) Inventeur: TEIXEIRA, David, 92852 RUEIL-MALMAISON CEDEX (FR); MULLER-SHERNETSKY, Elsa, 92852 RUEIL-MALMAISON CEDEX (FR); DUPIN, Victor, 92852 RUEIL-MALMAISON CEDEX (FR)
(74) Mandataire: IFP Energies nouvelles
(86) Numéro de dépôt international: PCT/EP2022/066911
(87) Numéro de publication internationale: WO 2022/268830

(56) Documents cités:
- WO-A1-2015/019096
- GB-A- 2 528 449
- GB-A- 2 537 126

## Description

### Domaine technique

La présente invention concerne le domaine technique du stockage et de la récupération d'énergie par gaz comprimé, notamment d'air comprimé.

Alors que les objectifs énergétiques mondiaux visent à favoriser les énergies renouvelables afin d'augmenter progressivement la proportion des énergies renouvelables dans le mix énergétique, le caractère variable et intermittent de ces énergies renouvelables demeure leur inconvénient majeur. Pour répondre à cette problématique, le stockage d'énergie apparait comme une solution très avantageuse. En stockant le surplus d'énergie produit au pic de production afin d'en disposer lorsque celle-ci devient inférieure à la demande, le stockage permet de s'affranchir de la contrainte de variabilité et apporte une flexibilité, voire une continuité, aux énergies renouvelables. Ainsi, le besoin en procédé et en système de stockage d'énergie devrait s'accroître dans les prochaines années, avec la proportion des énergies renouvelables dans le mix mondial.

De nombreuses technologies de stockage existent à l'heure actuelle comme les stockages de type mécanique tels que les Stations de Transfert d'Energie par Pompage (STEP) utilisant l'hydroélectricité produite par deux réservoirs d'eau situés à différentes altitudes. En phase de stockage d'électricité, l'eau du réservoir inférieur est pompée vers le réservoir supérieur et stockée à cette altitude. Lorsque la demande en électricité augmente, l'eau du réservoir supérieur est renvoyée vers le réservoir inférieur en passant par une turbine hydraulique qui va alors générer, via un alternateur, de l'électricité. Les barrages hydroélectriques fonctionnent également sur le même concept : le barrage retient l'eau à une altitude plus importante en amont qu'en aval et lorsque la demande en électricité augmente, le barrage libère l'eau en la faisant passer par des turboalternateurs hydrauliques produisant l'électricité.

Le stockage et la récupération d'énergie par air comprimé, connu sous le nom de CAES (de l'anglais « Compressed Air Energy Storage ») est une technologie pour laquelle une première installation a été construite en Allemagne fin des années 1970, d'une puissance de 290 MW. Le principe de cette technologie est d'utiliser l'électricité produite et non consommée pour comprimer un gaz, typiquement, de l'air. Afin d'éviter tout dommage sur les compresseurs, la chaleur résultant de la compression est évacuée entre chaque étage. L'air comprimé à moyenne ou haute pression (40 bar à 300 bar) est envoyé dans un stockage de type naturel tel qu'une cavité saline, une mine (sel, calcaire, charbon) ou encore dans un stockage artificiel en attendant la phase de décharge de l'énergie. Lors de la phase de production d'électricité, l'air stocké est extrait du stockage afin d'être détendu dans des turboalternateurs, après avoir été réchauffé dans une chambre de combustion.

Une variante de la technologie CAES est le procédé adiabatique, également appelé AACAES (de l'anglais « Advanced Adiabatic Compressed Air Energy Storage »). La différence principale avec le CAES est que la chaleur résultant de la compression n'est plus seulement évacuée entre chaque étage, c'est-à-dire perdue, mais stockée afin de pouvoir réchauffer l'air en amont des turbines en phase de récupération d'énergie. Grâce à cette réutilisation de l'énergie thermique interne au procédé, le rendement de l'AACAES peut atteindre environ 70% au lieu d'environ 50% pour le procédé CAES. Le refroidissement de l'air en phase de compression peut se faire dans un échangeur de chaleur avec un fluide caloporteur. Le fluide caloporteur chaud sera alors stocké afin de pouvoir céder sa chaleur à l'air lors de la phase de détente.

Toutefois, ces systèmes nécessitent des perfectionnements pour limiter l'encombrement et/ou la masse du système, et/ou son coût afin que le système soit économiquement pertinent.

### Technique antérieure

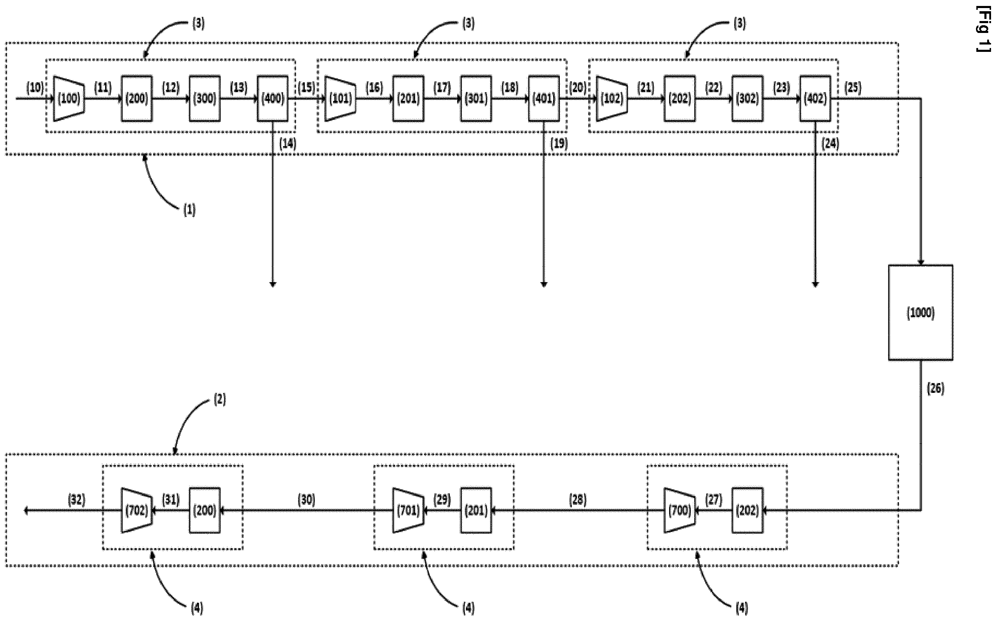

Une première solution pour limiter l'endommagement des compresseurs est d'extraire l'eau de la ligne de compression, au moyen d'un séparateur gaz/liquide prévu à chaque étage de compression. La figure 1 de l'art antérieur illustre, schématiquement sous la forme de schéma bloc, un tel système et procédé AACAES. Sur cette figure, sont représentées la phase de stockage d'énergie par compression d'un gaz, et la phase de production d'énergie par détente d'un gaz. Le système selon l'art antérieur se compose d'une ligne de compression 1, incluant un ou plusieurs étages de compression 3 en fonction de la pression de l'air à atteindre ainsi que des recommandations des fournisseurs. Dans le mode de réalisation illustré, la ligne de compression 1 comprend trois étages de compression 3. Chaque étage de compression 3 comporte un moyen de compression 100, 101, 102, appelé également compresseur. Le compresseur 100 est un compresseur basse pression, le compresseur 101 est un compresseur moyenne pression, et le compresseur 102 est un compresseur haute pression. Le gaz utilisé dans le procédé illustré est de l'air ambiant, contenant une saturation en eau liée à sa température et sa pression. Durant la phase de stockage d'énergie, l'air est comprimé dans la ligne de compression 1 puis envoyé dans un moyen de stockage d'air comprimé 1000 adapté aux hautes pressions. Des dispositifs de stockage et de récupération de la chaleur 200, 201, 202 sont disposés après chaque compresseur 100, 101, 102 de chaque étage de compression 3 afin de refroidir l'air comprimé chaud en sortie de compression tout en stockant cette énergie thermique. Le dispositif de stockage et de récupération de la chaleur 200 est adapté à la basse pression, le dispositif de stockage et de récupération de la chaleur 201 est adapté à la moyenne pression, et le dispositif de stockage et de récupération de la chaleur 202 est adapté à la haute pression. Des moyens de refroidissement 300, 301, 302 peuvent être disposés à la suite des dispositifs de stockage et de récupération de la chaleur 200, 201, 202 si nécessaire afin de finir le refroidissement de l'air comprimé avant le prochain étage de compression ou avant son stockage. Une fois l'air refroidi et avant l'étage de compression suivant, l'eau condensée, issue de l'humidité de l'air, est extraite du flux de compression d'air par des séparateurs gaz-liquide 400, 401, 402 afin d'avoir en entrée de compresseur un air sans trace d'eau liquide. Cette condensation de l'eau peut avoir lieu dans les dispositifs de stockage et de récupération de la chaleur 200, 201, 202 et/ou dans les moyens de refroidissement 300, 301, 302. Durant la phase de production d'énergie, l'air comprimé est détendu via une ou plusieurs turbines 700, 701, 702 d'un étage de détente, afin de produire de l'électricité via des alternateurs, non représentés sur le schéma. La turbine 702 est une turbine basse pression, la turbine 701 est une turbine moyenne pression et la turbine 700 est une turbine haute pression. Pour ce système et ce procédé, l'eau condensée est juste extraite, l'énergie associée est donc perdue.

On connait également la demande de brevet FR20/12/637 de la demanderesse, notamment la figure 2 de cette demande de brevet. Sur cette figure, sont représentées la phase de stockage d'énergie par compression d'un gaz, et la phase de production d'énergie par détente d'un gaz. Le système se compose d'une ligne de compression 1, incluant un ou plusieurs étages de compression 3 en fonction de la pression de l'air à atteindre. Dans le mode de réalisation illustré, la ligne de compression 1 comprend trois étages 3 de compression. Chaque étage de compression 3 comporte un moyen de compression 100, 101, 102, appelé également compresseur. Le compresseur 100 est un compresseur basse pression, le compresseur 101 est un compresseur moyenne pression, et le compresseur 102 est un compresseur haute pression. Le gaz utilisé 10 dans le procédé illustré est de l'air ambiant, contenant une saturation en eau liée à sa température et sa pression. Durant la phase de stockage d'énergie, l'air est comprimé dans la ligne de compression 1 puis envoyé dans un moyen de stockage d'air comprimé 1000 adapté aux hautes pressions. Des dispositifs de stockage et de récupération de la chaleur 200, 201, 202 sont disposés après chaque compresseur 100, 101, 102 de chaque étage de compression 3 afin de refroidir l'air comprimé chaud en sortie de compression tout en stockant cette énergie thermique. Le dispositif de stockage et de récupération de la chaleur 200 est adapté à la basse pression, le dispositif de stockage et de récupération de la chaleur 201 est adapté à la moyenne pression et le dispositif de stockage et de récupération de la chaleur 202 est adapté à la haute pression. Des moyens de refroidissement 300, 301, 302 peuvent être disposés à la suite des dispositifs de stockage et de récupération de la chaleur 200, 201, 202 si nécessaire afin de finir le refroidissement de l'air comprimé avant le prochain étage de compression ou avant son stockage. Une fois l'air refroidi et avant l'étage de compression suivant, l'eau condensée, issue de l'humidité de l'air, est extraite du flux de compression d'air par des séparateurs gaz-liquide 400, 401, 402 afin d'avoir en entrée de compresseur un air sans trace d'eau liquide. Cette condensation de l'eau peut avoir lieu dans les dispositifs de stockage et de récupération de la chaleur 200, 201, 202 et/ou dans les moyens de refroidissement 300, 301, 302. L'eau condensée à chaque étage de compression est alors envoyée dans des moyens de stockages de liquide 500, 501, 502. Le moyen de stockage 500 est adapté aux basses pressions, le moyen de stockage 501 est adapté aux moyennes pressions et le moyen de stockage 502 est adapté aux hautes pressions. Durant la phase de production d'énergie dans la ligne de détente 2, l'air comprimé est détendu via une ou plusieurs turbines 700, 701, 702 sur chaque étage de détente 4, selon les recommandations des fournisseurs, afin de produire de l'électricité via des alternateurs, non représentés sur le schéma. La turbine 702 est une turbine basse pression, la turbine 701 est une turbine moyenne pression et la turbine 700 est une turbine haute pression. Afin d'améliorer le rendement de chaque turbine, l'énergie thermique stockée dans les dispositifs de stockage et de récupération de la chaleur 200, 201, 202 est restituée au flux d'air en amont de chaque turbine en accord avec sa gamme de pression. Enfin, afin d'améliorer également la production d'électricité, l'eau condensée et préalablement stockée dans les moyens de stockages de liquide 500, 501, 502 est réinjectée en amont de chaque turbine de la gamme de pression associée via des moyens de mélanges 600, 601, 602 (aussi appelés mélangeurs) afin d'augmenter le débit de passage dans chaque turbine. L'eau condensée est alors réutilisée de façon optimale en phase de détente et son énergie associée n'est plus perdue.

Dans ces systèmes de l'art antérieur, les dispositifs de stockage et de récupération de la chaleur 200, 201 et 202 sont constitués de réservoirs (cylindriques par exemple) contenant des particules de stockage de la chaleur (des billes de béton ou des graviers par exemple). Ce sont des dispositifs de stockage et de récupération de la chaleur directs aptes à stocker la chaleur directement par le contact entre le gaz comprimé et les particules de stockage de la chaleur. Ainsi, lorsque le fluide comprimé chaud (sortant d'un des compresseurs 100, 101 ou 102) arrive dans le dispositif de stockage et de récupération de la chaleur 200, 201 ou 202, sa chaleur est cédée directement aux particules de stockage de la chaleur. Le fluide comprimé ressort ainsi refroidi du dispositif de stockage et de récupération de la chaleur 200, 201 ou 202, la chaleur étant stockée dans les particules de stockage de la chaleur.

A la détente, le fluide comprimé est réchauffé avant de passer dans les turbines 700, 701 ou 702. Pour cela, le fluide comprimé traverse à nouveau le dispositif de stockage et de récupération de la chaleur 200, 201 ou 202 où les particules de stockage de la chaleur ont au préalable emmagasiné de la chaleur (lors de l'étape de compression comme décrit au paragraphe précédent). Ainsi, la chaleur des particules de stockage de la chaleur va être cédée au fluide comprimé qui va ainsi sortir plus chaud du dispositif de stockage et de récupération de la chaleur 200, 201 ou 202 qu'il n'y est rentré. Les particules de stockage sont refroidies et donc pourront à nouveau être réutilisées lors d'une étape de compression pour refroidir le fluide comprimé chaud sortant d'un compresseur 100, 101 ou 102.

Comme les dispositifs de stockage et de récupération de la chaleur 200, 201 ou 202 sont soumis à la pression du fluide comprimé, ils nécessitent des masses importantes pour que le réservoir résiste à la pression interne, ces masses importantes entraînent des coûts élevés. C'est notamment le cas pour le dispositif de stockage et de récupération de la chaleur 202 soumis à la plus forte pression (dernier étage de compression avant le stockage du fluide comprimé dans le moyen de stockage d'air comprimé 1000). Comme l'épaisseur de l'enveloppe de ce réservoir du dispositif de stockage et de récupération de la chaleur est importante, son coût est élevé et les opérations de logistique (pour l'installation notamment) plus complexes.

Les documents GB2537126A, GB2528449A et WO2015/019096A1 divulguent d'autres systèmes selon l'art antérieur.

### Résumé de l'invention

L'objet de l'invention est de réduire l'encombrement et la masse (et donc réduire le coût) du dispositif de stockage et de récupération de la chaleur, et donc ceux du système, pour notamment réduire leur coût, tout en maintenant les performances énergétiques du système (le rendement principalement).

Ce but est atteint par un système de stockage et de récupération d'énergie par gaz comprimé conformément à la revendication 1 et comprenant :
- une ligne de compression de gaz avec au moins deux étages de compression, chaque étage de compression comprenant un moyen de compression et un dispositif de stockage et de récupération de la chaleur positionné en aval du moyen de compression, dans le sens de circulation du gaz comprimé dans l'étage de compression, chaque dispositif de stockage et de récupération de la chaleur étant soit exclusivement direct, soit exclusivement indirect
- au moins un moyen de stockage de gaz comprimé situé en sortie de la ligne de compression de gaz pour stocker le gaz comprimé,
- une ligne de détente pour détendre le gaz comprimé stocké dans le moyen de stockage de gaz comprimé, la ligne de détente comprenant au moins deux étages de détente successifs, chaque étage de détente comprenant des conduites et un moyen de détente, les conduites de chaque étage de détente étant configurées pour faire circuler le gaz comprimé dans au moins un dispositif de stockage et de récupération de la chaleur des étages de compression de manière à réchauffer le gaz comprimé avant le moyen de détente. De plus :

- sur l'un au moins des étages de compression, le dispositif de stockage et de récupération de la chaleur consiste en un dispositif de stockage et de récupération de la chaleur direct comprenant au moins un premier moyen de stockage et de récupération de la chaleur comprenant des premières particules de stockage de la chaleur, le premier moyen de stockage et de récupération de la chaleur étant configuré pour échanger directement de la chaleur directement entre le gaz comprimé et les premières particules de stockage de la chaleur, et
- sur au moins le dernier étage de compression, dans le sens de circulation du gaz comprimé, le dispositif de stockage et de récupération de la chaleur consiste en un dispositif de stockage et de récupération de la chaleur indirect comprenant une boucle de refroidissement, la boucle de refroidissement comprenant un échangeur de chaleur sans contact direct pour échanger de la chaleur entre le gaz comprimé et un fluide caloporteur apte à circuler dans la boucle de refroidissement, la boucle de refroidissement comprenant un deuxième moyen de stockage et de récupération de la chaleur comprenant des deuxièmes particules de stockage de la chaleur, le deuxième moyen de stockage et de récupération de la chaleur étant configuré de manière à échanger de la chaleur directement entre les deuxièmes particules de stockage et le fluide caloporteur.

L'invention concerne un système de stockage et de récupération d'énergie par gaz comprimé comprenant :
- une ligne de compression de gaz avec au moins deux étages de compression, chaque étage de compression comprenant un moyen de compression et un dispositif de stockage et de récupération de la chaleur positionné en aval du moyen de compression, dans le sens de circulation du gaz comprimé dans l'étage de compression,
- au moins un moyen de stockage de gaz comprimé situé en sortie de la ligne de compression de gaz pour stocker le gaz comprimé,
- une ligne de détente pour détendre du gaz comprimé stocké dans le moyen de stockage de gaz comprimé, la ligne de détente comprenant au moins deux étages de détente successifs, chaque étage de détente comprenant des conduites et un moyen de détente, les conduites de chaque étage de détente étant configurées pour faire circuler le gaz comprimé dans au moins un dispositif de stockage et de récupération de la chaleur des étages de compression de manière à réchauffer le gaz comprimé avant le moyen de détente.

De plus :
- sur l'un au moins des étages de compression, le dispositif de stockage et de récupération de la chaleur est un dispositif de stockage et de récupération de la chaleur direct comprenant au moins un premier moyen de stockage et de récupération de la chaleur comprenant des premières particules de stockage de la chaleur, le premier moyen de stockage et de récupération de la chaleur étant configuré pour échanger de la chaleur directement entre le gaz comprimé et les premières particules de stockage de la chaleur, et
- sur au moins le dernier étage de compression, dans le sens de circulation du gaz comprimé, le dispositif de stockage et de récupération de la chaleur est un dispositif de stockage et de récupération de la chaleur indirect comprenant une boucle de refroidissement, la boucle de refroidissement comprenant un échangeur de chaleur sans contact direct pour échanger de la chaleur entre le gaz comprimé et un fluide caloporteur apte à circuler dans la boucle de refroidissement, la boucle de refroidissement comprenant un deuxième moyen de stockage et de récupération de la chaleur comprenant des deuxièmes particules de stockage de la chaleur, le deuxième moyen de stockage et de récupération de la chaleur étant configuré de manière à échanger de la chaleur directement entre les deuxièmes particules de stockage et le fluide caloporteur.

De préférence, la ligne de compression comprend autant d'étages de compression que la ligne de détente comprend d'étages de détente, chaque dispositif de stockage et de récupération de la chaleur d'un étage de compression étant utilisé dans l'étage de détente à la pression correspondante, de préférence la ligne de détente et la ligne de compression comprennent chacune trois étages.

Avantageusement, au moins un étage de compression comprend un premier moyen de refroidissement en aval du dispositif de stockage et de récupération de chaleur, de préférence, ledit moyen de refroidissement comprenant un aéroréfrigérant.

De manière préférée, la boucle de refroidissement comprend un deuxième moyen de refroidissement en aval, dans le sens de l'écoulement du fluide caloporteur durant la charge du système, du deuxième moyen de stockage et de récupération de chaleur, de préférence, ledit deuxième moyen de refroidissement comprenant un aéroréfrigérant.

Selon une configuration de l'invention, au moins un étage de compression comprend un moyen de séparation pour séparer le gaz comprimé d'une phase liquide avant que le gaz comprimé n'atteigne l'étage de compression suivant ou le moyen de stockage de gaz comprimé, chaque étage de compression comprenant de préférence un moyen de stockage de liquide pour stocker ladite phase liquide à la pression de l'étage de compression.

De manière avantageuse, au moins un étage de détente comprend un moyen de mélange pour mélanger audit gaz comprimé ladite phase liquide sortant d'un des moyens de stockage de liquide des étages de compression, le moyen de mélange étant positionné en amont dudit dispositif de stockage et de récupération de chaleur.

Selon une mise en œuvre de l'invention, les conduites d'au moins le premier étage de détente sont configurées pour faire circuler le gaz comprimé dans au moins un dispositif de stockage et de récupération de la chaleur indirect et pour lequel les conduites d'au moins un autre étage de détente sont configurées pour faire circuler le gaz comprimé dans au moins un dispositif de stockage et de récupération de la chaleur direct.

Un procédé de stockage et de récupération d'énergie par gaz comprimé ne formant pas partie de l'invention revendiquée comprend au moins les étapes suivantes :
- En phase de stockage d'énergie :
   a) on comprime au moins une fois un gaz dans une ligne de compression comprenant au moins deux étages de compression, chaque étage de compression comprenant au moins un moyen de compression ;
   b) après chaque étape de compression, on récupère la chaleur dudit gaz comprimé dans au moins un dispositif de stockage et de récupération de la chaleur ; le dispositif de stockage et de récupération de la chaleur d'au moins le dernier étage de compression étant un dispositif de stockage et de récupération de la chaleur indirect avec une boucle de refroidissement comprenant un échangeur de chaleur pour échanger de la chaleur entre le gaz comprimé et un fluide caloporteur, et un deuxième moyen de stockage et de récupération de chaleur comprenant des deuxièmes particules de stockages, et le dispositif de stockage et de récupération de la chaleur d'au moins un autre étage étant un dispositif de stockage et de récupération de la chaleur direct.
   c) on stocke le gaz comprimé refroidi dans au moins un moyen de stockage de gaz comprimé.
- En phase de récupération d'énergie :
   d) on fait circuler le gaz comprimé sortant du moyen de stockage de gaz comprimé dans une ligne de détente d'au moins deux étages de détente, et dans chaque étage de détente, on réchauffe le gaz comprimé en le faisant circuler dans un des dispositifs de stockage et de récupération de la chaleur grâce à la chaleur stockée lors de l'étape de compression puis on détend le gaz comprimé réchauffé dans un moyen de détente.

De manière avantageuse, on réalise autant d'étapes de compression que d'étapes de détente, et on utilise le dispositif de stockage et de récupération de la chaleur de chacune des étapes b) pour réchauffer le gaz comprimé de l'étape de détente à la pression correspondante. Préférentiellement, on récupère la chaleur du gaz comprimé par des particules de stockage de la chaleur.

Avantageusement, après chaque étape de récupération de la chaleur, on refroidit le gaz comprimé en sortie du dispositif de stockage et de récupération de la chaleur dans un premier moyen de refroidissement avant que le gaz ne soit envoyé dans l'étape de compression suivante ou dans le moyen de stockage de gaz comprimé.

Selon une mise en œuvre de l'invention, lorsque le dispositif de stockage et de récupération de la chaleur est un dispositif de stockage et de récupération de la chaleur indirect, on refroidit le fluide caloporteur de la boucle de refroidissement par un deuxième moyen de refroidissement positionné sur la boucle de refroidissement après le moyen de stockage et de récupération de la chaleur.

Selon une configuration avantageuse de l'invention, on sépare le gaz comprimé d'une phase liquide qu'il contient dans un moyen de séparation, avant que le gaz comprimé ne soit envoyé dans l'étage de compression suivant ou dans le moyen de stockage du gaz comprimé, le liquide sortant de chaque moyen de séparation étant stocké ou évacué à la pression dans laquelle il se trouve dans un moyen de stockage de liquide.

De préférence, dans chaque étage de détente, on injecte le liquide stocké d'un moyen de stockage de liquide, et de préférence, on le mélange au gaz comprimé, avant chaque étape de réchauffage.

### Liste des figures

D'autres caractéristiques et avantages du système selon l'invention et/ou du procédé apparaîtront à la lecture de la description ci-après d'exemples non limitatifs de réalisations, en se référant aux figures annexées et décrites ci-après.
La figure 1, déjà décrite, représente un système et un procédé de stockage et de récupération d'énergie par gaz comprimé de l'art antérieur.
La figure 2, déjà décrite, représente un autre système et un procédé de stockage et de récupération d'énergie par gaz comprimé de l'art antérieur.
La figure 3 représente un premier mode de réalisation du système et du procédé selon l'invention.
La figure 4 représente un deuxième mode de réalisation du système et du procédé selon l'invention.
La figure 5 représente un troisième mode de réalisation du système et du procédé selon l'invention.
La figure 6 illustre un quatrième mode de réalisation du système et du procédé selon l'invention.

### Description des modes de réalisation

L'invention concerne un système de stockage et de récupération d'énergie par gaz comprimé (de l'air comprimé par exemple, l'air étant avantageusement prélevé dans le milieu ambiant) comprenant :
- une ligne de compression de gaz avec au moins deux étages de compression (de préférence trois étages de compression) pour comprimer le gaz jusqu'à une pression à laquelle on va stocker le gaz comprimé. Chaque étage de compression comprend un (unique) moyen de compression, tel qu'un compresseur, pour faire augmenter la pression du gaz comprimé. L'utilisation de plusieurs étages de compression (et donc de plusieurs moyens de compression) permet d'étager la compression par paliers afin d'avoir une pression élevée tout en ayant des rendements de compression acceptables. Chaque étage de compression comprend également un (unique) dispositif de stockage et de récupération de la chaleur positionné en aval (dans le sens de circulation du gaz comprimé dans l'étage de compression) du moyen de compression. En effet, le gaz ressortant du moyen de compression est à une pression et une température plus élevées que celles auxquelles il est entré dans ce moyen de compression. Or, il est préférable de refroidir le gaz comprimé avant qu'il n'atteigne le prochain étage de compression ou le moyen de stockage de gaz comprimé (si le gaz traverse le dernier étage de compression) afin de faciliter la compression de l'étage suivant ou de réduire les contraintes de conception et fabrication du moyen de stockage de gaz comprimé. Chaque dispositif de stockage et de récupération de la chaleur est soit exclusivement direct, soit exclusivement indirect. Par exclusivement direct, on entend que le dispositif de stockage et de récupération de la chaleur est un dispositif de stockage et de récupération de la chaleur à échange direct et ne comprend aucun dispositif de stockage et de récupération de la chaleur à échange indirect. Par exclusivement indirect, on entend que le dispositif de stockage et de récupération de la chaleur est un dispositif de stockage et de récupération de la chaleur à échange indirect et ne comprend aucun dispositif de stockage et de récupération de la chaleur à échange direct.
- au moins un moyen de stockage de gaz comprimé situé en sortie de la ligne de compression de gaz (en aval du dernier étage de compression) pour stocker le gaz comprimé. Comme le gaz comprimé a été refroidi au préalable, on peut stocker le gaz comprimé à une température relativement basse (de l'ordre de 30°C au lieu d'environ 200 à 300°C s'il n'y avait pas de dispositif de stockage et de récupération de la chaleur). Les contraintes thermiques du moyen de stockage de gaz comprimé sont donc réduites sur ce composant, ce qui permet de réduire sa masse et donc son coût.
- une ligne de détente pour détendre le gaz comprimé stocké dans le moyen de stockage de gaz comprimé et ainsi récupérer l'énergie emmagasinée par le gaz comprimé dans la ligne de compression. La ligne de détente comprend au moins deux étages de détente successifs, chaque étage de détente comprenant des conduites et un (unique) moyen de détente pour récupérer l'énergie du fluide sous pression. Le moyen de détente peut notamment être une turbine qui va transformer l'énergie du fluide comprimé en énergie mécanique rotative. Cette énergie mécanique rotative peut ensuite être envoyée dans une génératrice qui va la transformer en énergie électrique. Les conduites de chaque étage de détente sont configurées pour faire circuler le gaz comprimé dans au moins un dispositif de stockage et de récupération de la chaleur (de préférence dans un seul dispositif de stockage et de récupération de la chaleur) des étages de compression de manière à réchauffer le gaz comprimé avant le moyen de détente. Ainsi, dans chaque étage de détente, le fluide est réchauffé par un des dispositifs de stockage et de récupération de la chaleur avant d'atteindre le moyen de détente.

De plus, sur au moins un des étages de compression, le dispositif de stockage et de récupération de la chaleur est (consiste en) un dispositif de stockage et de récupération de la chaleur direct comprenant au moins un premier moyen de stockage et de récupération de la chaleur comprenant des premières particules de stockage de la chaleur. Le dispositif de stockage et de récupération de la chaleur consiste en un dispositif de stockage et de récupération de la chaleur direct : de ce fait, sur cet étage, il n'y a pas de dispositif de stockage et de récupération de la chaleur indirect, la chaleur étant alors stockée uniquement par contact direct. Le dispositif de stockage et de récupération de la chaleur direct comprend au moins un (un ou plusieurs) premier moyen de stockage et de récupération de la chaleur comprenant des premières particules de stockage de la chaleur. Ce premier moyen de stockage et de récupération de la chaleur peut être un réservoir contenant un lit fixe de premières particules de stockage de la chaleur (des billes de béton ou des graviers par exemple). Ainsi, le gaz comprimé échange directement (par contact direct) la chaleur qu'il contient avec les particules de stockage de la chaleur. Ce type de dispositif de stockage et de récupération de la chaleur direct est préféré pour les étages de compression « basses pressions », c'est-à-dire de préférence le premier étage de compression puis successivement de préférence le deuxième puis le troisième et ainsi de suite.

De préférence, lorsque le système a au moins trois étages de compression, le dispositif de stockage et de récupération de la chaleur peut être (peut consister en) un dispositif de stockage et de récupération de la chaleur direct comprenant au moins deux premiers moyens de stockage et de récupération de la chaleur, chacun de ces premiers moyens de stockage et de récupération de la chaleur comprenant des premières particules de stockage de la chaleur. Les dispositifs de stockage et de récupération de la chaleur directs sont généralement simples à mettre en œuvre.

En outre, sur au moins un étage de compression ( sur le dernier étage de compression, c'est-à-dire l'étage de compression juste avant le moyen de stockage de gaz comprimé) dans le sens de circulation du gaz comprimé, le dispositif de stockage et de récupération de la chaleur est (consiste en) un dispositif de stockage et de récupération de la chaleur indirect comprenant une boucle de refroidissement. Le dispositif de stockage et de récupération de la chaleur consiste en un dispositif de stockage et de récupération de la chaleur indirect : de ce fait, sur cet étage, il n'y a pas de dispositif de stockage et de récupération de la chaleur direct, la chaleur étant alors stockée uniquement par contact indirect. Le dispositif de stockage et de récupération de la chaleur indirect comprend au moins une (une ou plusieurs) boucle de refroidissement. La (ou chaque) boucle de refroidissement comprend un échangeur de chaleur sans contact direct (à contact indirect), aussi appelé moyen d'échange de chaleur, pour échanger de la chaleur entre le gaz comprimé et un fluide caloporteur apte à circuler dans la boucle de refroidissement. La boucle de refroidissement comprend (au moins) un deuxième moyen de stockage et de récupération de la chaleur comprenant des deuxièmes particules de stockage de la chaleur, le (ou chaque) deuxième moyen de stockage et de récupération de la chaleur étant configuré de manière à échanger de la chaleur directement entre les deuxièmes particules de stockage de la chaleur et le fluide caloporteur. Lorsque la boucle comprend plusieurs deuxièmes moyens de stockage et de récupération de chaleur, ces deuxièmes moyens de stockage et de récupération de chaleur peuvent être montés en série et/ou en parallèle. De ce fait, la chaleur du gaz comprimé est transmise par l'échangeur de chaleur sans contact direct (un échangeur à plaques ou un échangeur tubes/calandres par exemple) au fluide caloporteur. Comme l'échange de chaleur se fait sans contact direct entre le gaz comprimé et le fluide caloporteur (par une plaque ou un tube), la pression du fluide caloporteur peut être inférieure à celle du gaz comprimé. Le fluide caloporteur circule dans la boucle de refroidissement de manière à atteindre le deuxième moyen de stockage et de récupération de la chaleur où sa chaleur est transmise aux deuxièmes particules de stockage de la chaleur. Ainsi, le fluide caloporteur ressort du deuxième moyen de stockage et de récupération de la chaleur plus froid qu'il n'y est rentré et la chaleur est stockée dans les deuxièmes particules de stockage de la chaleur. L'avantage de ce type de dispositif de stockage et de récupération de la chaleur indirect est que la pression interne de la boucle de refroidissement et donc du deuxième moyen de stockage et de récupération de la chaleur est inférieure (bien inférieure) à celle qu'aurait un moyen de stockage et de récupération de la chaleur d'un dispositif de stockage et de récupération de la chaleur direct qui de fait est à la pression du gaz comprimé. De ce fait, ce deuxième moyen de stockage et de récupération de la chaleur est moins lourd (les parois peuvent être moins épaisses) et son coût est réduit. De plus, plus la différence de pression entre le gaz comprimé de l'étage concerné et la pression du fluide caloporteur est grande et plus le gain en masse et en coût est important. De ce fait, l'utilisation d'un dispositif de stockage et de récupération de la chaleur indirect est avantageuse pour les étages de compression « hautes pressions » donc préférentiellement le dernier étage de compression, puis l'avant-dernier, puis l'antépénultième et ainsi de suite.

Avantageusement, la boucle de refroidissement peut ne pas comprendre de moyens de détente, tels qu'une turbine, et/ou ne pas comprendre de moyens de compression, tels qu'un compresseur ou une pompe. Ainsi, la consommation d'énergie du système serait réduite.

La boucle de refroidissement peut en outre comporter un vase d'expansion, afin d'absorber les dilatations thermiques du fluide dus à la chaleur récupérer, et/ou un filtre pour éviter que les particules fines qui peuvent notamment se produire à partir des particules de stockage de la chaleur, ne circulent dans la boucle.

Le système de stockage et de récupération d'énergie ne comprend pas d'étages de compression comprenant un dispositif de stockage et de récupération de chaleur direct et un dispositif de stockage et de récupération de chaleur indirect. En d'autres termes, le dispositif de stockage et de récupération de chaleur de chaque étage de compression consiste soit en un dispositif de stockage et de récupération de chaleur direct soit en un dispositif de stockage et de récupération de chaleur indirect. Dans ce cas, il n'existe aucun étage de compression qui comprend à la fois un dispositif de stockage et de récupération de chaleur direct et à la fois un dispositif de stockage et de récupération de chaleur indirect. Cette combinaison de dispositifs de stockage et de récupération de chaleur direct et indirect augmenterait les coûts du système sans apporter de bénéfice sur les performances du système.

La combinaison de l'utilisation de dispositifs de stockage et de récupération de la chaleur exclusivement direct (sans combinaison avec un dispositif de stockage et de récupération de la chaleur indirect) pour certains étages de compression et exclusivement indirect (sans combinaison avec un dispositif de stockage et de récupération de la chaleur direct) pour d'autres étages de compression permet une diminution de la masse et du coût du système tout en maintenant un rendement intéressant pour le système et un système le plus simple possible.

Par exemple, le dispositif de stockage et de récupération de chaleur du dernier étage de compression peut consister en un (unique) dispositif de stockage et de récupération de chaleur indirect et les dispositifs de stockage et de récupération de chaleur des autres étages de compression (à l'exception du dernier étage de compression) peuvent consister uniquement en des dispositifs de stockage et de récupération de chaleur direct. L'unique dispositif de stockage et de récupération de chaleur indirect du dernier étage de compression peut être constitué d'au moins une (une ou plusieurs) boucle de refroidissement tel que décrite précédemment (chaque boucle de refroidissement comprend au moins un (un unique ou plusieurs) deuxième moyen de stockage et de récupération de chaleur comprenant des deuxièmes particules de stockage de chaleur) et les dispositifs de stockage et de récupération de chaleur direct des autres étages de compression peuvent être constitués chacun, d'un ou plusieurs premiers moyens de stockage et de récupération d'énergie, montés en série et/ou en parallèle, comprenant des premières particules de stockage de chaleur. Cette configuration permet un meilleur compromis entre la masse (et le coût) du système et ses performances pour le stockage et la récupération d'énergie.

Selon quelques variantes qui peuvent être combinées ou non entre elles, le système peut comprendre :
- Plusieurs lignes de compression, en parallèle, aboutissant à un même et unique moyen de stockage du gaz comprimé ou à plusieurs moyens de stockage du gaz compression. Par exemple, chaque ligne de compression peut être connectée à un seul moyen de stockage du gaz comprimé ou à plusieurs moyens de stockage du gaz comprimé en parallèle.

- Plusieurs lignes de détente en parallèle, partant d'un même et unique moyen de stockage du gaz comprimé ou de plusieurs moyens de stockage du gaz comprimé. Par exemple, chaque ligne de détente peut être connectée à un seul moyen de stockage du gaz comprimé ou à plusieurs moyens de stockage du gaz comprimé en parallèle.
- Parmi les étages de compression, plusieurs étages de compression en parallèle
- Parmi les étages de détente, plusieurs étages de détente en parallèle.
- Sur un étage de compression, plusieurs moyens de séparation en série et/ou en parallèle et/ou plusieurs moyens de refroidissement en série et/ou en parallèle.
- Chaque étage de compression peut comprendre une ou plusieurs branches de compression en parallèles sur lesquelles peuvent être mis en place par exemple les moyens de compression, les dispositifs de stockage et de récupération de chaleur, les moyens de séparation, et/ou les moyens de refroidissement.
- Chaque étage de détente peut comprendre une ou plusieurs branches de détente en parallèles sur lesquelles peuvent être mis en place par exemple les moyens de détente, les dispositifs de stockage et de récupération de chaleur et/ou les moyens de mélange.

De préférence, la ligne de compression peut comprendre autant d'étages de compression que la ligne de détente comprend d'étages de détente, chaque dispositif de stockage et de récupération de la chaleur d'un étage de compression étant utilisé dans l'étage de détente à la pression correspondante.

Par « pression correspondante », on n'entend pas une pression absolue mais celle de l'étage concerné. En d'autres termes, le nombre d'étages de compression et le nombre d'étages de détente peuvent être identiques. Cette réalisation permet une conception « symétrique » des lignes de compression et de détente, avec notamment des pressions et des températures de fonctionnement similaires, ce qui favorise les échanges de chaleur dans les moyens de stockage et de récupération de la chaleur. Ainsi, le système et le procédé sont simplifiés. Par exemple, lorsque la ligne de compression et la ligne de détente comprennent chacune trois étages, le premier étage de compression est un étage dit « basse pression », le deuxième étage de compression est un étage dit « moyenne pression », et le dernier étage est un étage dit « haute pression ». La ligne de détente comprend alors un premier étage de détente « haute pression », un deuxième étage de détente « moyenne pression » et un troisième étage de détente « basse pression ». Les terminologies « haute pression », « moyenne pression » et « basse pression » s'entendent relativement entre les différents étages de la ligne de compression et de la ligne de détente. Ainsi, le dispositif de stockage et de récupération de chaleur utilisé pour le troisième étage de compression (« haute pression ») est utilisé pour réchauffer le gaz comprimé du premier étage de détente (« haute pression »). Le dispositif de stockage et de récupération de chaleur utilisé pour le deuxième étage de compression (« moyenne pression ») est utilisé pour réchauffer le gaz comprimé du deuxième étage de détente (« moyenne pression ») et le dispositif de stockage et de récupération de chaleur utilisé pour le premier étage de compression (« basse pression ») est utilisé pour réchauffer le gaz comprimé du troisième étage de détente (« basse pression »). Cette configuration est avantageuse car la pression et la température de chaque étage de compression correspond sensiblement à la pression et à la température de chaque étage de détente, ce qui permet encore d'améliorer les performances du système.

De préférence, la ligne de détente et la ligne de compression peuvent comprendre chacune trois étages. Cette configuration permet d'améliorer les performances de compression et de détente tout en limitant le coût.

Avantageusement, au moins un étage de compression peut comprendre un premier moyen de refroidissement en aval du dispositif de stockage et de récupération de chaleur (dans le sens de circulation du gaz comprimé dans l'étage de compression), qu'il soit direct ou indirect. Le premier moyen de refroidissement sert à refroidir encore le gaz comprimé avant qu'il n'entre dans l'étage de compression suivant ou dans le moyen de stockage de gaz comprimé de manière à améliorer encore la compression du gaz de l'étage suivant et/ou à réduire les contraintes de conception du moyen de stockage de gaz comprimé.

De préférence, le premier moyen de refroidissement peut comprendre un aéroréfrigérant. Un aéroréfrigérant permet de refroidir le gaz comprimé seulement avec l'air extérieur ambiant. De ce fait, il s'agit d'un moyen de refroidissement simple à mettre en œuvre et peu coûteux. Selon une variante, le moyen de refroidissement peut être un échangeur de chaleur à tubes/calandres, à plaques et/ou spiralés de manière à échanger de la chaleur entre le gaz comprimé et un fluide qui peut être de l'eau, du propane, du butane par exemples.

Selon un mode de réalisation de l'invention, la boucle de refroidissement peut comprendre un deuxième moyen de refroidissement en aval du deuxième moyen de stockage et de récupération de chaleur (dans le sens de circulation du fluide caloporteur dans la boucle de refroidissement), avant le moyen d'échange de chaleur. Le deuxième moyen de refroidissement sert à refroidir encore le fluide caloporteur de la boucle de refroidissement après son passage dans le moyen de stockage et de récupération de la chaleur comprenant des deuxièmes particules de stockage de la chaleur et avant qu'il n'entre dans le moyen d'échange de chaleur, de manière à réduire la température du fluide caloporteur entrant dans le moyen d'échange de chaleur permettant ainsi d'améliorer encore la compression du gaz de l'étage suivant et/ou réduire les contraintes de conception du moyen de stockage de gaz comprimé.

De préférence, le deuxième moyen de refroidissement peut comprendre un aéroréfrigérant, pour refroidir le fluide caloporteur seulement avec l'air extérieur ambiant. De ce fait, il s'agit d'un moyen de refroidissement simple à mettre en œuvre et peu coûteux.

Selon une variante, le deuxième moyen de refroidissement peut être un échangeur de chaleur à tubes/calandres, à plaques et/ou spiralés de manière à échanger de la chaleur entre le fluide caloporteur et un autre fluide qui peut être de l'eau, du propane, du butane par exemples.

Selon une configuration avantageuse de l'invention, au moins un étage de compression (de préférence chaque étage de compression) peut comprendre un moyen de séparation (un séparateur gaz/liquide par exemple) pour séparer le gaz comprimé d'une phase liquide avant que le gaz comprimé n'atteigne l'étage de compression suivant ou le moyen de stockage de gaz comprimé (dans le cas du dernier étage de compression), chaque étage de compression comprenant un moyen de séparation comprenant de préférence un moyen de stockage de liquide (et préférentiellement, distinct) pour stocker la phase liquide à la pression de l'étage de compression. Ainsi, à chaque étage de compression, le système comprend un moyen de séparation distinct et chaque moyen de séparation de chaque étage de compression est connecté à un moyen de stockage de liquide distinct. En effet, lorsque la chaleur du gaz comprimé est récupérée dans le dispositif de stockage et de récupération de la chaleur ou que le gaz comprimé est refroidi dans le moyen de refroidissement, le gaz comprimé est refroidi et de fait, de la condensation peut se produire. Cela peut notamment être le cas lorsque le gaz est de l'air prélevé dans le milieu ambiant ; il peut alors contenir de la vapeur d'eau. Cette vapeur d'eau peut alors se condenser et la phase liquide produite est susceptible d'engendrer des dommages dans les étages de compression ou au moyen de stockage de gaz comprimé (par de la corrosion par exemple). De plus, chaque étage de compression peut comprendre un moyen de stockage de liquide distinct pour stocker la phase liquide à la pression de l'étage de compression. Ainsi, chaque phase liquide récupérée dans chaque étage de compression peut être stockée à la pression de chaque étage de compression, cette phase pouvant être injectée à la phase de détente à la pression la plus proche correspondante.

De manière avantageuse, au moins un étage de détente peut comprendre un moyen de mélange (un mélangeur par exemple) pour injecter et mélanger au gaz comprimé la phase liquide sortant d'un des moyens de stockage de liquide des étages de compression, le moyen de mélange étant positionné en amont du dispositif de stockage et de récupération de chaleur. Ainsi, on peut injecter une phase liquide qui est vaporisée dans le dispositif de stockage et de récupération de chaleur avant chaque moyen de détente, que ce dispositif de stockage et de récupération de chaleur soit direct (avec un moyen de stockage et de récupération de la chaleur comprenant des particules de stockage de la chaleur) ou indirect (avec une boucle de refroidissement comprenant un fluide caloporteur, un moyen d'échange de la chaleur sans contact direct et un moyen de stockage et de récupération de la chaleur comprenant des particules de stockage de la chaleur). L'ajout de la phase liquide permet d'augmenter le débit du gaz en entrée du moyen de détente (de la turbine par exemple) et ainsi d'en améliorer les performances.

De préférence, chaque étage de détente peut comprendre un moyen de mélange pour injecter et mélanger au gaz comprimé la phase liquide sortant d'un des moyens de stockage de liquide des étages de compression, chaque moyen de mélange étant positionné en amont du dispositif de stockage et de récupération de chaleur de chaque étage de détente. Avantageusement, chaque moyen de mélange de chaque étage de détente est connecté à un moyen de stockage de liquide différent, chacun des moyens de stockage de liquide étant connecté à un moyen de séparation différent d'un étage de compression. Ainsi, la gestion de liquide est optimisée dans le système. Ce système est encore optimisé lorsque le système comprend autant d'étages de compression que d'étages de détente, et donc le nombre d'étages de compression est égal au nombre d'étages de détente, au nombre de moyens de séparation du système, au nombre de moyens de stockage de liquide du système et au nombre de moyens de mélange du système.

Selon une mise en œuvre de l'invention, les conduites d'au moins le premier étage de détente peuvent être configurées pour faire circuler le gaz comprimé dans au moins un dispositif de stockage et de récupération de la chaleur indirect et les conduites d'au moins un autre étage de détente (de préférence au moins le dernier étage de détente) peuvent être configurées pour faire circuler le gaz comprimé dans au moins un dispositif de stockage et de récupération de la chaleur direct. En effet, le premier étage de détente est celui qui a la pression la plus élevée : sa pression correspond donc au dernier étage de compression (celui des étages de compression qui a la pression la plus élevée). Ainsi, il est plus avantageux d'utiliser le dispositif de stockage et de récupération de la chaleur indirect pour ce premier étage de détente et par la suite préférentiellement pour le deuxième puis le troisième et ainsi de suite.

Un procédé de stockage et de récupération d'énergie par gaz comprimé ne formant pas partie de l'invention revendiquée comprend au moins les étapes suivantes :
- En phase de stockage d'énergie :
   a) on comprime au moins une fois un gaz dans une ligne de compression comprenant au moins deux étages de compression, chaque étage de compression comprenant au moins un moyen de compression tel qu'un compresseur ;
   b) après chaque étape de compression, on récupère la chaleur du gaz comprimé dans au moins un dispositif de stockage et de récupération de la chaleur ; le dispositif de stockage et de récupération de la chaleur d'au moins une étape de compression (de préférence la dernière étape de compression) avec un dispositif de stockage et de récupération de la chaleur indirect mettant ainsi en œuvre une étape de stockage et de récupération de la chaleur indirect avec une boucle de refroidissement comprenant un échangeur de chaleur pour échanger de la chaleur entre le gaz comprimé et un fluide caloporteur, et un (deuxième) moyen de stockage et de récupération de chaleur comprenant des (deuxièmes) particules de stockage de la chaleur pour échanger directement de la chaleur entre le fluide caloporteur et les (deuxièmes) particules de stockage de la chaleur, et l'étape de stockage et de récupération de la chaleur d'au moins une autre étape de compression avec un dispositif de stockage et de récupération de la chaleur direct (comprenant un premier moyen de stockage et de récupération de la chaleur comprenant un lit fixe de premières particules de stockage de la chaleur) pour échanger directement (par contact direct) de la chaleur entre le gaz comprimé et les premières particules de stockage. Ainsi, l'étape de stockage et de récupération de la chaleur d'au moins une autre étape de compression met en œuvre une étape de stockage et de récupération de la chaleur direct.

L'échange indirect permet d'utiliser une boucle de refroidissement et un fluide caloporteur tel que décrit précédemment et donc d'utiliser un fluide caloporteur a une pression inférieure à la pression du gaz comprimé. L'échange direct est simple à mettre en œuvre et est donc à privilégier par exemple lorsque la pression de l'étage de compression est relativement faible par rapport à la pression du fluide caloporteur (la différence de pression étant de l'ordre de 20 Bar par exemple) ou que le gain en masse et/ou en coût du système est faible, par exemple inférieure à 2%.

c) on stocke le gaz comprimé refroidi dans au moins un moyen de stockage de gaz comprimé.
- En phase de récupération d'énergie :

d) on fait circuler le gaz comprimé sortant du moyen de stockage de gaz comprimé dans une ligne de détente comprenant au moins deux étapes de détente, et dans chaque étape de détente, on réchauffe le gaz comprimé en le faisant circuler dans un des dispositifs de stockage et de récupération de la chaleur (direct ou indirect) grâce à la chaleur stockée lors de l'étape de compression puis on détend le gaz comprimé réchauffé dans un moyen de détente. Réchauffer le gaz avant son passage dans le moyen de détente (une turbine par exemple) permet d'augmenter les performances du système.

En d'autres termes, le procédé est adapté à la mise en œuvre du système tel que décrit précédemment.

Avantageusement, on peut réaliser autant d'étapes de compression que d'étapes de détente, et on peut utiliser le dispositif de stockage et de récupération de la chaleur de chacune des étapes b) pour réchauffer le gaz comprimé de l'étape de détente à la pression correspondante. Ainsi, chaque dispositif de stockage et de récupération de la chaleur (direct ou indirect) d'un étage de compression est particulièrement adapté pour réchauffer un étage de détente (à la pression correspondante). De ce fait, la récupération de la chaleur dans la ligne de détente est optimisée.

De manière avantageuse, on peut récupérer la chaleur du gaz comprimé par des (premières et/ou deuxièmes) particules de stockage de la chaleur, de préférence contenues dans les (premiers ou deuxièmes) moyens de stockage et de récupération de la chaleur du dispositif de stockage et de récupération de la chaleur direct ou indirect. Ainsi, la chaleur stockée dans les particules de stockage peut être réutilisées facilement à la détente pour réchauffer le gaz comprimé dans les étages de détente.

Les particules de stockage de la chaleur peuvent être des billes de béton, des graviers et/ou des matériaux à changement de phase (éventuellement encapsulés). Les billes de béton et les graviers sont des solutions simples et peu onéreuses.

De préférence, après chaque étape de récupération de la chaleur, on peut refroidir le gaz comprimé en sortie du dispositif de stockage et de récupération de la chaleur (direct ou indirect) dans un premier moyen de refroidissement avant que le gaz ne soit envoyé dans l'étape de compression suivante ou dans le moyen de stockage de gaz comprimé (pour le dernier étage de compression). Ainsi, le gaz comprimé peut être mieux refroidi avant d'entrer dans l'étage de compression suivant ou dans le moyen de stockage de gaz comprimé.

Selon une mise en œuvre du procédé, lorsque le dispositif de stockage et de récupération de la chaleur est un dispositif de stockage et de récupération de la chaleur indirect (avec une boucle de refroidissement tel que décrit dans le système de l'invention), on peut refroidir le fluide caloporteur de la boucle de refroidissement par un deuxième moyen de refroidissement positionné sur la boucle de refroidissement après le moyen de stockage et de récupération de la chaleur (en amont dans le sens de circulation du fluide caloporteur dans la boucle de refroidissement), plus précisément entre le moyen de stockage et de récupération de la chaleur et l'échangeur de chaleur sans contact direct, dans le sens de circulation du fluide caloporteur dans la boucle de refroidissement. De ce fait, le fluide caloporteur est mieux refroidi avant d'atteindre l'échangeur de chaleur.

De manière avantageuse, on peut séparer le gaz comprimé d'une phase liquide qu'il contient dans un moyen de séparation, tel qu'un séparateur, avant que le gaz comprimé ne soit envoyé dans l'étage de compression suivant ou dans le moyen de stockage du gaz comprimé, le liquide sortant de chaque moyen de séparation étant stocké à la pression dans laquelle il se trouve dans un moyen de stockage de liquide. Ainsi, le liquide qui pourrait se condenser lors du refroidissement du gaz comprimé par le dispositif de stockage et de récupération de chaleur ou par le premier moyen de refroidissement est séparé de la phase gazeuse, ce qui permet de limiter le risque d'endommagement des composants de l'étage de compression suivant (notamment du moyen de compression) ou du moyen de stockage de gaz comprimé.

Préférentiellement, dans chaque étage de détente, on peut injecter le liquide stocké d'un moyen de stockage de liquide, et on peut le mélanger au gaz comprimé, avant chaque étape de réchauffage. Ainsi, le débit du gaz passant dans le moyen de détente est augmenté, ce qui permet d'augmenter les performances du moyen de détente. De plus, chaque moyen de stockage de liquide étant à une pression et à une température déterminées, chaque étage de détente peut avantageusement utiliser l'un des moyens de stockage de liquide d'un étage de compression (à la pression correspondante).

De plus, de ce fait, la gestion de liquide dans le système est optimisée puisque le liquide sortant de la phase de compression est réintroduit dans la phase de détente.

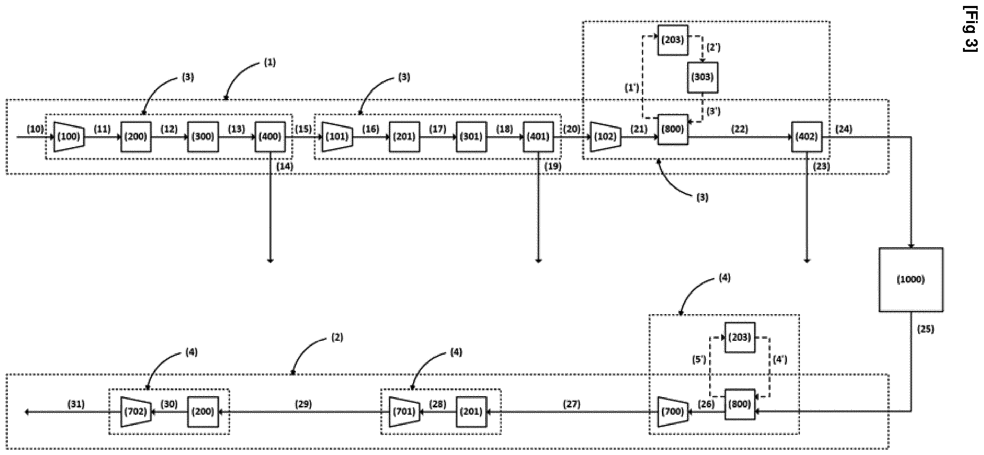

La figure 3 illustre, de manière schématique et non limitative, un premier mode de réalisation du système selon l'invention.

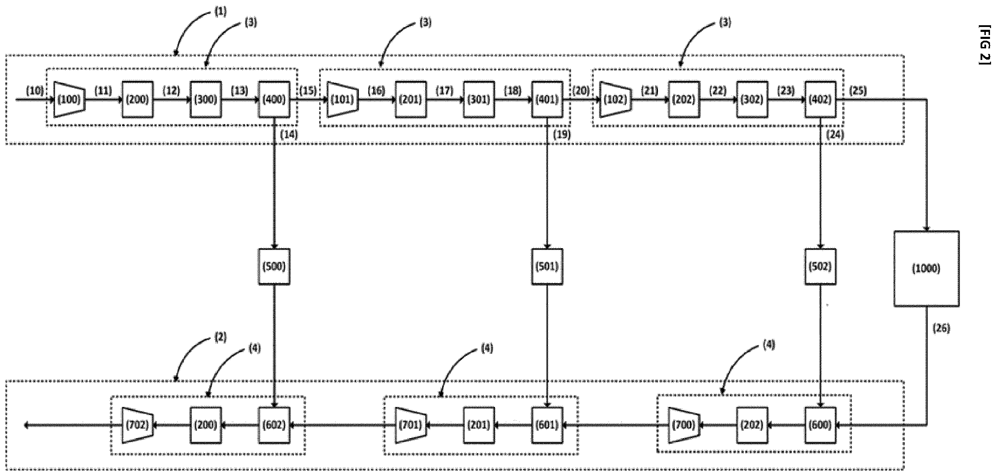

Sur cette figure, les éléments et les références identiques à ceux des figures 1 et 2 correspondent aux mêmes éléments et ne seront pas redétaillés.

La figure 3 se distingue de la figure 1 par le remplacement du dispositif de stockage et de récupération de la chaleur 202 du dernier étage de compression de la figure 1 par un dispositif de stockage et de récupération de la chaleur indirect comprenant une boucle de refroidissement. La boucle de refroidissement comprend un échangeur de chaleur 800 sans contact direct permettant d'échanger de la chaleur entre le gaz comprimé et un fluide caloporteur contenu dans la boucle de refroidissement, un deuxième moyen de stockage et de récupération de la chaleur 203 comprenant des deuxièmes particules de stockage de la chaleur formant un lit fixe et un deuxième moyen de refroidissement 303 (un aéroréfrigérant) entre le deuxième moyen de stockage et de récupération de la chaleur 203 et l'échangeur de chaleur 800 (dans le sens de circulation du fluide caloporteur dans la boucle de refroidissement).

De plus, sur cette figure 3, sur le dernier étage de compression, il n'y a pas de premier moyen de refroidissement (tel qu'un aéroréfrigérant) en aval du dispositif de stockage et de récupération de la chaleur indirect (en aval de l'échangeur de chaleur 800).

Le système de la figure 3 comprend deux premiers moyens de stockage et de récupération de la chaleur 200 et 201 comprenant chacun des premières particules de stockage de la chaleur et qui échangent directement de la chaleur entre les premières particules de stockage de la chaleur et le gaz comprimé.

Le fluide caloporteur peut notamment être du SYLTHERM^{™} (Dow, USA) comme c'est le cas pour les exemples des figures 3 à 6. Toutefois, d'autres fluides caloporteurs analogues peuvent être utilisés dans le système et le procédé selon l'invention.

La figure 3 se distingue également de la figure 1 sur la ligne de détente où le dispositif de stockage et de récupération de la chaleur 202 du premier étage de détente de la figure 1 est remplacé par le dispositif de stockage et de récupération de la chaleur indirect du dernier étage de compression. Ainsi, avant d'atteindre la première turbine 700 de la ligne de détente, le gaz comprimé traverse l'échangeur de chaleur sans contact direct 800 où il est réchauffé par le fluide caloporteur grâce aux deuxièmes particules de stockage de la chaleur contenues dans le deuxième moyen de stockage et de récupération de chaleur 203. Lorsque cette boucle de refroidissement est utilisée à l'étage de détente, bien entendu, le fluide caloporteur peut ne pas circuler dans le premier moyen de refroidissement afin de récupérer un maximum de chaleur pour réchauffer le gaz comprimé.

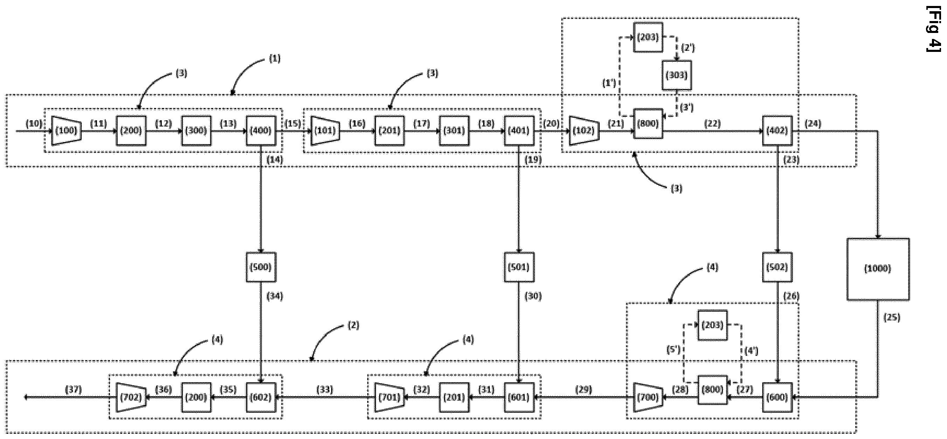

La figure 4 illustre de manière schématique et non limitative un deuxième mode de réalisation de l'invention.

Sur cette figure, les éléments et les références identiques à ceux des figures 1 à 3 correspondent aux mêmes éléments et ne seront pas redétaillés.

En outre, cette figure se distingue de la figure 3 par l'ajout de moyen de stockage de liquide 500, 501 et 502 en sortie de chacun des moyens de séparation, respectivement 400, 401 et 402.

De plus, de manière à optimiser la gestion de liquide au sein du système, le système comprend des moyens de mélange 600, 601 et 602 en sortant de chacun des moyens de stockage de liquide, respectivement 500, 501 et 502 pour réintroduire le liquide avant le passage du fluide dans le moyen de détente 700, 701 et 702.

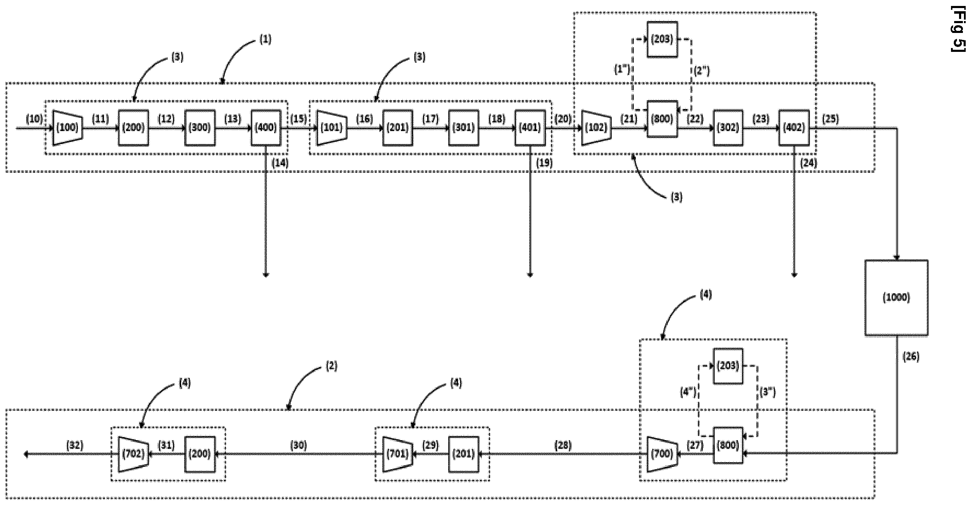

La figure 5 illustre, de manière schématique et non limitative, un troisième mode de réalisation de l'invention.

Sur cette figure, les éléments et les références identiques à ceux des figures 1 à 4 correspondent aux mêmes éléments et ne seront pas redétaillés.

Le système de cette figure se distingue de celui de la figure 3 par la suppression du deuxième moyen de refroidissement 303 sur la boucle de refroidissement du dispositif de stockage et de récupération de la chaleur indirect et par l'ajout d'un premier moyen de refroidissement 302 en aval du dispositif de stockage et de récupération de la chaleur indirect (en aval de l'échangeur de chaleur 800 et avant le moyen de séparation 402 dans le sens de circulation du gaz comprimé dans la ligne de compression).

Le système de la figure 5 comprend deux premiers moyens de stockage et de récupération de la chaleur 200 et 201 comprenant chacun des premières particules de stockage de la chaleur et qui échangent directement de la chaleur entre les premières particules de stockage de la chaleur et le gaz comprimé.

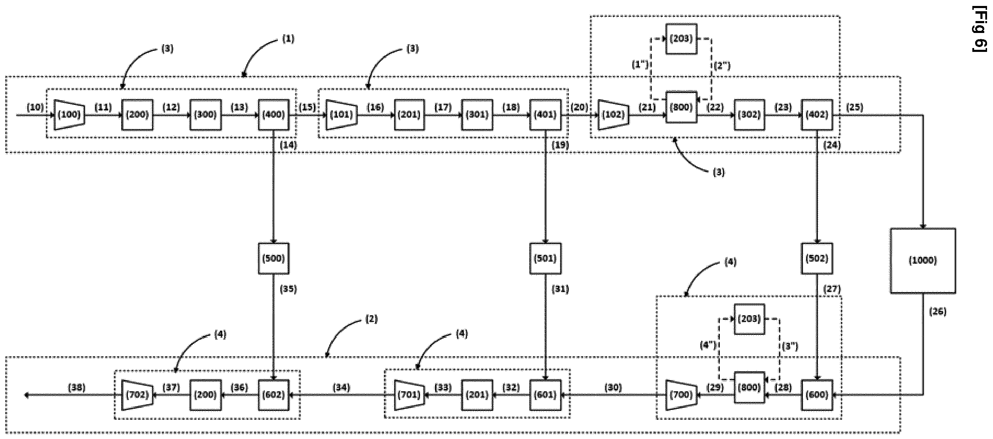

La figure 6 illustre, de manière schématique et non limitative, un quatrième mode de réalisation de l'invention.

Sur cette figure, les éléments et les références identiques à ceux des figures 1 à 5 correspondent aux mêmes éléments et ne seront pas redétaillés.

Le système de cette figure se distingue de celui de la figure 5 par l'ajout de moyen de stockage de liquide 500, 501 et 502 en sortie de chacun des moyens de séparation, respectivement 400, 401 et 402.

De plus, de manière à optimiser la gestion de liquide au sein du système, le système comprend des moyens de mélange 600, 601 et 602 en sortant de chacun des moyens de stockage de liquide, respectivement 500, 501 et 502 pour réintroduire le liquide avant le passage du fluide dans le moyen de détente 700, 701 et 702.

Le système de la figure 6 comprend deux premiers moyens de stockage et de récupération de la chaleur 200 et 201 comprenant chacun des premières particules de stockage de la chaleur et qui échangent directement de la chaleur entre les premières particules de stockage de la chaleur et le gaz comprimé.

Dans les figures 3 à 6, la ligne de compression et la ligne de détente comprennent chacune avantageusement respectivement trois étages de compression et trois étages de détente mais un nombre différent d'étages de compression et/ou de détente pourrait être utilisé.

De plus, dans ces figures, les deux premiers étages de compression comprennent deux premiers moyens de stockage et de récupération de la chaleur 200 et 201 comprenant chacun des premières particules de stockage de la chaleur et qui échangent directement de la chaleur entre les premières particules de stockage de la chaleur et le gaz comprimé et le dernier étage de compression comprend une boucle de refroidissement avec un deuxième moyen de stockage et de récupération de la chaleur 203 comprenant chacun des deuxièmes particules de stockage de la chaleur pour échanger de la chaleur entre les deuxièmes particules de stockage de la chaleur et un fluide caloporteur distinct (différent) du gaz comprimé. Bien entendu, le système pourrait comprendre d'autres premiers moyens de stockage et de récupération de la chaleur et/ou d'autres boucles de refroidissement avec d'autres deuxièmes moyens de stockage et de récupération de la chaleur.

### Exemples

Les systèmes des figures 3 à 6 de l'invention ont été comparés aux systèmes de l'art antérieur illustrés sur les figures 1 et 2. Plus précisément, les systèmes de l'invention correspondant aux figures 3 et 5 sont comparés à l'art antérieur de la figure 1 : tous ces systèmes ne réutilisent pas le liquide récupéré en sortie des moyens de séparation, pour la phase de détente. Les systèmes de l'invention correspondant aux figures 4 et 6 sont comparés à l'art antérieur de la figure 2 : tous ces systèmes réutilisent le liquide récupéré en sortie des moyens de séparation pour la phase de détente.

Pour les modes de réalisation des figures 3 à 6 comprenant une boucle de refroidissement sur l'étage de compression à la plus haute pression, le fluide caloporteur circulant dans la boucle de refroidissement est du SYLTHERM^{™}.

Le système de l'art antérieur de la figure 1 fonctionne par exemple de la manière suivante.

Pendant la phase de compression 1, un flux d'air extérieur 10, à une pression atmosphérique et une température de 27°C et possédant une humidité de 14.6 grammes d'eau par kilogramme d'air, est comprimé par un compresseur basse pression 100 d'où il sort 11 à une température de 255°C et une pression de 6 bar (0,6 MPa). Ce flux 11 est envoyé vers un dispositif de stockage et de récupération de la chaleur direct basse pression 200 comprenant des premières particules de stockage de la chaleur échangeant directement la chaleur avec le gaz comprimé, le dispositif de stockage et de récupération de la chaleur 200 refroidissant l'air jusqu'à une température de 90°C et stockant cette énergie thermique dans les particules de stockage de la chaleur jusqu'à la phase de détente 2. Le flux 12 est refroidi une nouvelle fois par le moyen de refroidissement 300 jusqu'à atteindre une température de 50°C en sortie. Le flux 13 est alors composé d'air et d'eau, issue de l'humidité de l'air, condensée durant les phases de refroidissement dans le dispositif de stockage et de récupération de la chaleur direct 200 et/ou dans le moyen de refroidissement 300. Cette eau condensée 14 est séparée de la ligne de compression 2 dans un séparateur gaz-liquide 400 opérant à la pression du flux. Le flux de gaz 15 sortant du séparateur gaz/liquide 400, de nouveau totalement gazeux, est comprimé par un compresseur moyenne pression 101 d'où il ressort 16 à une température de 275°C et une pression de 28 bar. Le flux 16 est envoyé vers un dispositif de stockage et de récupération de la chaleur direct moyenne pression 201 comprenant des premières particules de stockage de la chaleur échangeant directement la chaleur avec le gaz comprimé, le dispositif de stockage et de récupération de la chaleur 201 refroidissant l'air jusqu'à une température de 100°C et stockant cette énergie thermique dans les particules de stockage de la chaleur jusqu'à la phase de détente 2. Le flux 17 sortant du dispositif de stockage et de récupération de la chaleur direct 201 est refroidi une nouvelle fois par un moyen de refroidissement 301 jusqu'à atteindre une température de 50°C en sortie. Le flux 18 en sortie du moyen de refroidissement 301 est alors composé d'air et d'eau, issue de l'humidité de l'air, condensée durant les phases de refroidissement dans le dispositif de stockage et de récupération de la chaleur direct 201 et/ou dans le moyen de refroidissement 301. Cette eau condensée 19 est séparée de la ligne de compression 1 dans un séparateur gaz-liquide 401 opérant à la pression du flux. Le flux 20, de nouveau totalement gazeux, sortant du séparateur gaz/liquide 401 est comprimé par un compresseur haute pression 102 d'où il ressort à une température de 250°C et une pression de 117 bar. Le flux 21 est envoyé vers un dispositif de stockage et de récupération de la chaleur direct haute pression 202 comprenant des premières particules de stockage de la chaleur échangeant directement la chaleur avec le gaz comprimé, le dispositif de stockage et de récupération de la chaleur 202 refroidissant l'air jusqu'à une température de 45°C et stockant cette énergie thermique dans les particules de stockage de la chaleur jusqu'à la phase de détente 2. Le flux 22 sortant du dispositif de stockage et de récupération de la chaleur direct 202 est refroidi une nouvelle fois par un moyen de refroidissement 302 jusqu'à atteindre une température de 30°C en sortie, 30°C étant la température de stockage de l'air. Le flux 23 est alors composé d'air et d'eau, issue de l'humidité de l'air, condensée durant les phases de refroidissement dans le dispositif de stockage et de récupération de la chaleur direct 202 et/ou dans le moyen de refroidissement 302. Cette eau condensée 24 est séparée de la ligne de compression 1 dans un séparateur gaz-liquide 402 opérant à la pression du flux 23.

Le flux 25 d'air comprimé à une pression de 117 bar et une température de 30°C est alors envoyé vers le moyen de stockage d'air comprimé 1000 en attendant la phase de récupération de l'énergie 2.

Lorsque l'on veut produire de l'électricité, le flux d'air comprimé 26 à une pression de 117 bar et une température de 30°C, sortant du moyen de stockage d'air comprimé 1000 est réchauffé dans le dispositif de stockage et de récupération de la chaleur direct haute pression 202 qui libère la chaleur stockée dans les particules de stockage de la chaleur durant la phase de compression jusqu'à ce que le flux 27 atteigne une température de 240°C. Ce flux d'air chaud et comprimé 27 est détendu dans la turbine haute pression 700 produisant de l'électricité via un alternateur, jusqu'à atteindre en sortie 28 une pression de 28 bar et une température de 85°C. Le flux 28 est réchauffé dans le dispositif de stockage et de récupération de la chaleur direct moyenne pression 201 qui libère la chaleur stockée dans les particules de stockage de la chaleur durant la phase de compression jusqu'à ce que le flux 29 atteigne une température de 265°C. Ce flux d'air chaud et comprimé 29 est détendu dans la turbine moyenne pression 701 produisant de l'électricité via un alternateur, jusqu'à atteindre en sortie 30 une pression de 5 bar et une température de 75°C. Le flux 30 est réchauffé dans le dispositif de stockage et de récupération de la chaleur direct basse pression 200 qui libère la chaleur stockée dans les particules de stockage de la chaleur durant la phase de compression jusqu'à ce que le flux 31 atteigne une température de 245°C. Ce flux d'air chaud et comprimé 31 est détendu dans la turbine basse pression 702 produisant de l'électricité via un alternateur, jusqu'à atteindre en sortie 32 une pression de 1.02 bar et une température de 80°C.

Le rendement du procédé de stockage d'énergie de l'exemple de la figure 1 de l'art antérieur est de 69.6% pour une puissance consommée de 100 MW aux compresseurs. Le débit total d'eau condensée aux trois étages de compression est de 7.5 t/h. La puissance de stockage thermique est de 87 MW et la puissance de refroidissement nécessaire est de 20.5 MW.

Le système de la figure 3 fonctionne par exemple de la manière suivante. Pendant la phase de compression 1, un flux d'air extérieur 10, à une pression atmosphérique et une température de 27°C et possédant une humidité de 14.6 grammes d'eau par kilogramme d'air, est comprimé par un compresseur basse pression 100 d'où il sort 11 à une température de 255°C et une pression de 6 bar. Ce flux 11 est envoyé vers un dispositif de stockage et de récupération de la chaleur direct basse pression 200 comprenant des premières particules de stockage de la chaleur échangeant directement la chaleur avec le gaz comprimé, le dispositif de stockage et de récupération de la chaleur 200 refroidissant l'air jusqu'à une température de 90°C et stockant cette énergie thermique dans les particules de stockage de la chaleur jusqu'à la phase de détente 2. Le flux 12 est refroidi une nouvelle fois par un moyen de refroidissement 300 jusqu'à atteindre une température de 50°C en sortie. Le flux 13 est alors composé d'air et d'eau, issue de l'humidité de l'air, condensée durant les phases de refroidissement dans le dispositif de stockage et de récupération de la chaleur direct 200 et/ou dans le moyen de refroidissement 300. Cette eau condensée 14 est séparée du flux de la ligne de compression 1 dans un séparateur gaz-liquide 400, opérant à la pression du flux 13. Le flux 15, de nouveau totalement gazeux, est comprimé par un compresseur moyenne pression 101 d'où il ressort à une température de 275°C et une pression de 28 bar. Le flux 16 est envoyé vers un dispositif de stockage et de récupération de la chaleur direct moyenne pression 201 comprenant des premières particules de stockage de la chaleur échangeant directement la chaleur avec le gaz comprimé, le dispositif de stockage et de récupération de la chaleur 201 refroidissant l'air jusqu'à une température de 93°C et stockant cette énergie thermique dans les particules de stockage jusqu'à la phase de détente 2. Le flux 17 est refroidi une nouvelle fois par un moyen de refroidissement 301 jusqu'à atteindre une température de 50°C en sortie 18. Le flux 18 est alors composé d'air et d'eau, issue de l'humidité de l'air, condensée durant les phases de refroidissement dans le dispositif de stockage et de récupération de la chaleur direct 201 et/ou dans le moyen de refroidissement 301. Cette eau condensée 19 est séparée du flux de la ligne de compression 1 dans un séparateur gaz-liquide 401, opérant à la pression du flux 18. Le flux 20, de nouveau totalement gazeux, est comprimé par un compresseur haute pression 102 d'où il ressort à une température de 250°C et une pression de 117 bar. Le flux 21 est envoyé vers un échangeur de chaleur à contact indirect 800 permettant l'échange de chaleur entre le flux d'air chaud 21 et un flux de fluide caloporteur (3') basse pression (6 bar). Le flux 21 est refroidi jusqu'à atteindre une température de 55°C en sortie 22. Le fluide caloporteur se réchauffe par échange thermique jusqu'à atteindre une température de 245°C en sortie de l'échangeur de chaleur à contact indirect 800. Ce flux 1' est alors envoyé vers un moyen de stockage et de récupération de la chaleur direct basse pression 203 comprenant des deuxièmes particules de stockage de la chaleur échangeant directement la chaleur avec le fluide caloporteur, le moyen de stockage et de récupération de la chaleur 203 refroidissant le fluide caloporteur jusqu'à une température de 65°C et stockant cette énergie thermique dans les deuxièmes particules de stockage de la chaleur jusqu'à la phase de détente 2. Le flux 2' de fluide caloporteur est refroidi une nouvelle fois par un moyen de refroidissement 303 jusqu'à atteindre une température de 50°C en sortie 3' et ainsi effectuer une boucle de refroidissement entre le moyen de stockage et de récupération de la chaleur direct basse pression 203 et l'échangeur de chaleur sans contact direct 800, cet ensemble formant un dispositif de stockage et de récupération de la chaleur indirect. Le flux 22 sortant de ce dispositif de stockage et de récupération de la chaleur indirect est alors composé d'air et d'eau, issue de l'humidité de l'air, condensée durant la phase de refroidissement dans l'échangeur de chaleur 800. Cette eau condensée est séparée du flux de la ligne de compression 1 dans un séparateur gaz-liquide 402, opérant à la pression du flux 22.

Le flux d'air comprimé à une pression de 117 bar et une température de 55°C sortant du séparateur gaz-liquide 402 est alors envoyé vers le moyen de stockage d'air comprimé 1000 en attendant la phase de récupération d'énergie 2.

De plus, on considère que la température de l'air stocké dans le moyen de stockage d'air comprimé 1000 baisse de 10°C durant l'intervalle entre les phases de compression et de détente.

Lorsque l'on veut produire de l'électricité, le flux d'air comprimé à une pression de 117 bar et une température de 45°C, sortant du moyen de stockage d'air comprimé 1000 est réchauffé par échange thermique avec le flux 4' de fluide caloporteur basse pression dans l'échangeur de chaleur sans contact direct 800 jusqu'à ce que le flux atteigne la température de 230°C. Le flux 4' est préalablement réchauffé dans le moyen de stockage et de récupération de la chaleur basse pression 203 qui libère la chaleur stockée dans les deuxièmes particules de stockage de la chaleur durant la phase de compression jusqu'à ce que le flux 4' atteigne une température de 235°C. Le flux de fluide caloporteur est refroidi jusqu'à une température de 50°C en sortie (5') de l'échangeur de chaleur 800 et renvoyé au moyen de stockage et de récupération de la chaleur basse pression 203 pour effectuer une boucle de réchauffage entre le moyen de stockage et de récupération de la chaleur basse pression 203 et l'échangeur de chaleur sans contact direct 800. Le flux d'air chaud et comprimé est détendu dans la turbine haute pression 700 produisant de l'électricité via un alternateur, jusqu'à atteindre en sortie une pression de 28 bar et une température de 80°C. Le flux est alors réchauffé dans le dispositif de stockage et de récupération de la chaleur direct moyenne pression 201 qui libère la chaleur stockée dans les premières particules de stockage de la chaleur durant la phase de compression jusqu'à ce que le flux atteigne une température de 265°C. Ce flux d'air chaud et comprimé est détendu dans la turbine moyenne pression 701 produisant de l'électricité via un alternateur, jusqu'à atteindre en sortie une pression de 5 bar et une température de 75°C. Le flux est réchauffé dans le dispositif de stockage et de récupération de la chaleur direct basse pression 200 qui libère la chaleur stockée dans les premières particules de stockage de la chaleur durant la phase de compression jusqu'à ce que le flux atteigne une température de 245°C. Ce flux d'air chaud et comprimé est détendu dans la turbine basse pression 702 produisant de l'électricité via un alternateur, jusqu'à atteindre en sortie une pression de 1.02 bar et une température de 80°C.

Le rendement du procédé de stockage d'énergie est de 69.3% pour une puissance consommée de 100 MW aux compresseurs. Le débit total d'eau condensée aux trois étages de compression est de 7.5 t/h. La puissance de stockage thermique est de 84.5 MW et la puissance de refroidissement nécessaire est de 16.8 MW. Ainsi, les performances sont proches de celle du système de la figure 1 avec une puissance de refroidissement nécessaire inférieure (ce qui implique moins de consommation d'énergie).

L'intégration de la boucle de refroidissement (ou de réchauffage en phase de détente) de fluide caloporteur associée à l'échangeur de chaleur et au moyen de stockage et de récupération de la chaleur direct basse pression sur l'étage haute pression permet de diminuer le coût du moyen de stockage et de récupération de la chaleur 203 de 79% par rapport au moyen de stockage et de récupération de la chaleur 202 de l'exemple de la figure 1. De plus, la mise en place du dispositif de stockage et de récupération de la chaleur indirect (échangeur de chaleur, moyen de stockage et de récupération de la chaleur basse pression et fluide caloporteur) permet une diminution de coût de 11% par rapport au dispositif moyen de stockage et de récupération de la chaleur direct haute pression (constitué par le moyen de stockage et de récupération de la chaleur 202) de l'exemple de la figure 1.

Le système de la figure 5 fonctionne par exemple de la manière suivante.

Les deux premiers étages de compression 3, basse et moyenne pression, sont similaires à ceux de l'exemple de la figure 3.

La distinction entre le système des figures 3 et 5 intervient au niveau de l'étage de compression haute pression suite à la compression du flux d'air 20 par un compresseur haute pression 102 d'où il ressort à une température de 250°C et une pression de 117 bar. Le flux 21 est envoyé vers un échangeur de chaleur sans contact direct 800 permettant l'échange de chaleur entre le flux d'air chaud 21 et un flux de fluide caloporteur 2" basse pression. Le flux 21 est refroidi jusqu'à atteindre une température de 50°C en sortie 22. Le fluide caloporteur se réchauffe par échange thermique jusqu'à atteindre une température de 245°C en sortie. Ce flux 1" est alors envoyé vers un moyen de stockage et de récupération de la chaleur direct basse pression 203 comprenant des deuxièmes particules de stockage de la chaleur, le moyen de stockage et de récupération de la chaleur 203 refroidissant le fluide caloporteur jusqu'à une température de 50°C et stockant cette énergie thermique dans les deuxièmes particules de stockage de la chaleur jusqu'à la phase de détente 2, effectuant ainsi une boucle de refroidissement entre le moyen de stockage et de récupération de la chaleur direct basse pression 203 et l'échangeur de chaleur sans contact direct 800. Le flux 22 est refroidi une nouvelle fois par un moyen de refroidissement 302 jusqu'à atteindre une température de 30°C en sortie, 30°C étant la température de stockage de l'air. Le flux 23 est alors composé d'air et d'eau, issue de l'humidité de l'air, condensée durant les phases de refroidissement dans l'échangeur de chaleur 800 et/ou dans le moyen de refroidissement 302. Cette eau condensée 24 est séparée du flux de la ligne de compression 1 dans un séparateur gaz-liquide 402, opérant à la pression du flux 23.

Le flux d'air comprimé 25 à une pression de 117 bar et une température de 30°C est alors envoyé vers le moyen de stockage d'air comprimé 1000 en attendant la phase de récupération d'énergie 2.

Lorsque l'on veut produire de l'électricité, le flux d'air comprimé 26 à une pression de 117 bar et une température de 30°C, sortant du moyen de stockage d'air comprimé 1000 est réchauffé par échange thermique avec le flux 3" de fluide caloporteur basse pression dans l'échangeur de chaleur sans contact direct 800 jusqu'à ce que le flux 27 atteigne la température de 230°C. Le flux 3" est préalablement réchauffé dans le moyen de stockage et de récupération de la chaleur direct basse pression 203 qui libère la chaleur stockée dans les deuxièmes particules de stockage de la chaleur durant la phase de compression jusqu'à ce que le flux 3" atteigne une température de 235°C. Le flux de fluide caloporteur 4" est refroidi jusqu'à une température de 35°C en sortie de l'échangeur de chaleur 800 et renvoyé au moyen de stockage et de récupération de la chaleur basse pression 203 pour effectuer une boucle de réchauffage entre le moyen de stockage et de récupération de la chaleur basse pression 203 et l'échangeur de chaleur sans contact direct 800. Le flux d'air chaud et comprimé 27 est détendu dans la turbine haute pression 700 produisant de l'électricité via un alternateur, jusqu'à atteindre en sortie une pression de 28 bar et une température de 80°C. Le flux 28 est réchauffé dans le dispositif de stockage et de récupération de la chaleur direct moyenne pression 201 qui libère la chaleur stockée dans les premières particules de stockage de la chaleur durant la phase de compression jusqu'à ce que le flux 29 atteigne une température de 265°C. Ce flux d'air chaud et comprimé 29 est détendu dans la turbine moyenne pression 701 produisant de l'électricité via un alternateur, jusqu'à atteindre en sortie une pression de 5 bar et une température de 75°C. Le flux 30 est réchauffé dans le dispositif de stockage et de récupération de la chaleur direct basse pression 200 qui libère la chaleur stockée dans les premières particules de stockage de la chaleur durant la phase de compression jusqu'à ce que le flux 31 atteigne une température de 245°C. Ce flux d'air chaud et comprimé 31 est détendu dans la turbine basse pression 702 produisant de l'électricité via un alternateur, jusqu'à atteindre en sortie 32 une pression de 1.02 bar et une température de 80°C.

Le rendement du procédé de stockage d'énergie est de 69.2% pour une puissance consommée de 100 MW aux compresseurs. Le débit total d'eau condensée aux trois étages de compression est de 7.6 t/h. La puissance de stockage thermique est de 87 MW et la puissance de refroidissement nécessaire est de 21 MW. Ainsi, ce système a des performances proches de celui de la figure 1.

L'intégration de la boucle de fluide caloporteur associée à l'échangeur de chaleur et au moyen de stockage et de récupération de la chaleur basse pression sur l'étage haute pression permet de diminuer le coût du moyen de stockage et de récupération de la chaleur 203 de 79% par rapport à celui 202 de la figure 1.

Le système de l'art antérieur de la figure 2 fonctionne par exemple de la manière suivante.

Pendant la phase de compression 1, un flux d'air extérieur 10, à une pression de 1.02 bar et une température de 27°C et possédant une humidité de 14.6 gramme d'eau par kilogramme d'air, est comprimé par un compresseur basse pression 100 d'où il sort à une température de 255°C et une pression de 6 bar. Ce flux 11 est envoyé vers un dispositif de stockage et de récupération de la chaleur direct basse pression 200 comprenant des premières particules de stockage de la chaleur échangeant directement la chaleur avec le gaz comprimé, le dispositif de stockage et de récupération de la chaleur refroidissant l'air jusqu'à une température de 80°C et stockant cette énergie thermique dans les premières particules de stockage jusqu'à la phase de détente 2. Le flux 12 est refroidi une nouvelle fois par un moyen de refroidissement 300 jusqu'à atteindre une température de 50°C en sortie. Le flux 13 est alors composé d'air et d'eau, issue de l'humidité de l'air, condensée durant les phases de refroidissement dans le dispositif de stockage et de récupération de la chaleur direct 200 et/ou dans le moyen de refroidissement 300. Cette eau condensée 14 est séparée du flux de la ligne de compression 1 dans un séparateur gaz-liquide 400, opérant à la pression du flux 13, puis envoyée vers un moyen de stockage de liquide 500 sous une pression maintenue de 6 bar. Le flux 15, de nouveau totalement gazeux, est comprimé par un compresseur moyenne pression 101 d'où il ressort à une température de 275°C et une pression de 28 bar. Le flux 16 est envoyé vers un dispositif de stockage et de récupération de la chaleur direct moyenne pression 201 comprenant des premières particules de stockage de la chaleur échangeant directement la chaleur avec le gaz comprimé, le dispositif de stockage et de récupération de la chaleur 201 refroidissant l'air jusqu'à une température de 80°C et stockant cette énergie thermique dans les premières particules de stockage de la chaleur jusqu'à la phase de détente 2. Le flux 17 est refroidi une nouvelle fois par un moyen de refroidissement 301 jusqu'à atteindre une température de 50°C en sortie. Le flux 18 est alors composé d'air et d'eau, issue de l'humidité de l'air, condensée durant les phases de refroidissement dans le dispositif de stockage et de récupération de la chaleur direct 201 et/ou dans le moyen de refroidissement 301. Cette eau condensée 19 est séparée du flux de la ligne de compression 1 dans un séparateur gaz-liquide 401, opérant à la pression du flux 18, puis envoyée vers un moyen de stockage de liquide 501 sous une pression maintenue de 28 bar. Le flux 20, de nouveau totalement gazeux, est comprimé par un compresseur haute pression 102 d'où il ressort à une température de 250°C et une pression de 117 bar. Le flux 21 est envoyé vers un dispositif de stockage et de récupération de la chaleur direct haute pression 202 comprenant des premières particules de stockage de la chaleur échangeant directement de la chaleur avec le gaz comprimé, le dispositif de stockage et de récupération de la chaleur 202 refroidissant l'air jusqu'à une température de 40°C et stockant cette énergie thermique dans les premières particules de stockage de la chaleur jusqu'à la phase de détente 2. Le flux 22 est refroidi une nouvelle fois par un moyen de refroidissement 302 jusqu'à atteindre une température de 30°C en sortie, 30°C étant la température de stockage de l'air. Le flux 23 est alors composé d'air et d'eau, issue de l'humidité de l'air, condensée durant les phases de refroidissement dans le dispositif de stockage et de récupération de la chaleur direct 202 et/ou dans le moyen de refroidissement 302. Cette eau condensée 24 est séparée du flux de la ligne de compression 1 dans un séparateur gaz-liquide 402, opérant à la pression du flux 23, puis envoyée vers un moyen de stockage de liquide 502 sous une pression maintenue de 117 bar.

Le flux d'air comprimé 25 à une pression de 117 bar et une température de 30°C est alors envoyé vers le moyen de stockage d'air comprimé 1000 en attendant la phase de récupération d'énergie 2.

Lorsque l'on veut produire de l'électricité, un flux d'eau condensée provenant du moyen de stockage de liquide 502 à une pression de 117 bar et une température de 30°C est réinjecté dans le flux d'air comprimé 26 sortant du moyen de stockage d'air comprimé 1000 via le mélangeur 600. Le flux ainsi formé est réchauffé dans le dispositif de stockage et de récupération de la chaleur direct haute pression 202 qui libère la chaleur stockée dans les premières particules de stockage de la chaleur durant la phase de compression jusqu'à ce que le flux atteigne une température de 240°C. Ce flux d'air chaud et comprimé est détendu dans la turbine haute pression 700 produisant de l'électricité via un alternateur, jusqu'à atteindre en sortie une pression de 28 bar et une température de 85°C. Un flux d'eau condensée provenant du moyen de stockage de liquide 501 à une pression de 28 bar et une température de 50°C est réinjecté dans le flux d'air comprimé sortant de la turbine haute pression 700 via le mélangeur 601. Le flux ainsi formé est réchauffé dans le dispositif de stockage et de récupération de la chaleur direct moyenne pression 201 qui libère la chaleur stockée dans les premières particules de stockage de la chaleur durant la phase de compression jusqu'à ce que le flux atteigne une température de 255°C. Ce flux d'air chaud et comprimé est détendu dans la turbine moyenne pression 701 produisant de l'électricité via un alternateur, jusqu'à atteindre en sortie une pression de 5 bar et une température de 70°C. Un flux d'eau condensée provenant du moyen de stockage de liquide 500 à une pression de 6 bar et une température de 50°C est réinjecté dans le flux d'air comprimé sortant de la turbine moyenne pression 701 via le mélangeur 602. Le flux ainsi formé est réchauffé dans le dispositif de stockage et de récupération de la chaleur direct basse pression 200 qui libère la chaleur stockée dans les premières particules de stockage de la chaleur durant la phase de compression jusqu'à ce que le flux atteigne une température de 245°C. Ce flux d'air chaud et comprimé est détendu dans la turbine basse pression 702 produisant de l'électricité via un alternateur, jusqu'à atteindre en sortie une pression de 1.02 bar et une température de 80°C.

Le rendement du procédé de stockage d'énergie est de 70.4% pour une puissance consommée de 100 MW aux compresseurs. Le débit total d'eau condensée aux trois étages de compression est de 7.5 t/h. La puissance de stockage thermique est de 93 MW et la puissance de refroidissement nécessaire est de 14.6 MW.

Le système de la figure 4 fonctionne par exemple de la manière suivante.

Pendant la phase de compression 1, un flux d'air extérieur 10, à une pression de 1.02 bar et une température de 27°C et possédant une humidité de 14.6 gramme d'eau par kilogramme d'air, est comprimé par un compresseur basse pression 100 d'où il sort à une température de 255°C et une pression de 6 bar. Ce flux 11 est envoyé vers un dispositif de stockage et de récupération de la chaleur direct basse pression 200 comprenant des premières particules de stockage de la chaleur échangeant directement la chaleur avec le gaz comprimé, le dispositif de stockage et de récupération de la chaleur 200 refroidissant l'air jusqu'à une température de 80°C et stockant cette énergie thermique dans les premières particules de stockage de la chaleur jusqu'à la phase de détente 2. Le flux 12 est refroidi une nouvelle fois par un moyen de refroidissement 300 jusqu'à atteindre une température de 50°C en sortie. Le flux 13 est alors composé d'air et d'eau, issue de l'humidité de l'air, condensée durant les phases de refroidissement dans le dispositif de stockage et de récupération de la chaleur direct 200 et/ou dans le moyen de refroidissement 300. Cette eau condensée 14 est séparée du flux de la ligne de compression 1 dans un séparateur gaz-liquide 400, opérant à la pression du flux 13, puis envoyée vers un moyen de stockage de liquide 500 sous une pression maintenue de 6 bar. Le flux 15, de nouveau totalement gazeux, est comprimé par un compresseur moyenne pression 101 d'où il ressort à une température de 275°C et une pression de 28 bar. Le flux 16 est envoyé vers un dispositif de stockage et de récupération de la chaleur direct moyenne pression 201 comprenant des premières particules de stockage de la chaleur échangeant directement de la chaleur avec le gaz comprimé, le dispositif de stockage et de récupération de la chaleur 201 refroidissant l'air jusqu'à une température de 80°C et stockant cette énergie thermique dans les premières particules de stockage jusqu'à la phase de détente 2. Le flux 17 est refroidi une nouvelle fois par un moyen de refroidissement 301 jusqu'à atteindre une température de 50°C en sortie. Le flux 18 est alors composé d'air et d'eau, issue de l'humidité de l'air, condensée durant les phases de refroidissement dans le dispositif de stockage et de récupération de la chaleur direct 201 et/ou dans le moyen de refroidissement 301. Cette eau condensée 19 est séparée du flux de la ligne de compression 1 dans un séparateur gaz-liquide 401, opérant à la pression du flux 18, puis envoyée vers un moyen de stockage de liquide 501 sous une pression maintenue de 28 bar. Le flux 20, de nouveau totalement gazeux, est comprimé par un compresseur haute pression 102 d'où il ressort à une température de 250°C et une pression de 117 bar. Le flux 21 est envoyé vers un échangeur de chaleur à contact indirect 800 permettant l'échange de chaleur entre le flux d'air chaud 21 et un flux de fluide caloporteur 3' basse pression. Le flux 21 est refroidi jusqu'à atteindre une température de 55°C en sortie de l'échangeur de chaleur à contact indirect 800. Le fluide caloporteur se réchauffe par échange thermique jusqu'à atteindre une température de 245°C en 1'. Ce flux 1' est alors envoyé vers un moyen de stockage et de récupération de la chaleur basse pression 203 comprenant des deuxièmes particules de stockage de la chaleur échangeant directement de la chaleur avec le fluide caloporteur, le moyen de stockage et de récupération de la chaleur 203 refroidissant le fluide caloporteur jusqu'à une température de 60°C et stockant cette énergie thermique dans les deuxièmes particules de stockage de la chaleur jusqu'à la phase de détente 2. Le flux 2' de fluide caloporteur est refroidi une nouvelle fois par un deuxième moyen de refroidissement 303 jusqu'à atteindre une température de 50°C en sortie 3' et ainsi effectuer une boucle de refroidissement entre le moyen de stockage et de récupération de la chaleur basse pression 203 et l'échangeur de chaleur à contact indirect 800, formant ainsi un dispositif de stockage et de récupération de la chaleur indirect. Le flux 22 est alors composé d'air et d'eau, issue de l'humidité de l'air, condensée durant la phase de refroidissement dans l'échangeur de chaleur 800. Cette eau condensée est séparée du flux de la ligne de compression 1 dans un séparateur gaz-liquide 402, opérant à la pression du flux 22, puis envoyée vers un moyen de stockage de liquide 502 sous une pression maintenue de 117 bar.

Le flux d'air comprimé à une pression de 117 bar et une température de 55°C est alors envoyé vers le moyen de stockage d'air comprimé 1000 en attendant la phase de récupération d'énergie 2. On considère que la température de l'air stocké dans le moyen de stockage 1000 baisse de 10°C durant l'intervalle entre les phases de compression et de détente.

Lorsque l'on veut produire de l'électricité, un flux d'eau condensée provenant du moyen de stockage de liquide 502 à une pression de 117 bar et une température de 55°C est réinjecté dans le flux d'air comprimé sortant du moyen de stockage d'air comprimé 1000 via le mélangeur 600. Le flux ainsi formé est réchauffé par échange thermique avec le flux 4' de fluide caloporteur basse pression dans l'échangeur de chaleur à contact indirect 800 jusqu'à ce que le flux atteigne la température de 230°C. Le flux 4' est préalablement réchauffé dans le moyen de stockage et de récupération de la chaleur basse pression 203 qui libère la chaleur stockée dans les deuxièmes particules de stockage de la chaleur durant la phase de compression jusqu'à ce que le flux 4' atteigne une température de 235°C. Le flux de fluide caloporteur est refroidi jusqu'à une température de 50°C en sortie 5' de l'échangeur de chaleur 800 et renvoyé au moyen de stockage et de récupération de la chaleur basse pression 203 pour effectuer une boucle de réchauffage entre le moyen de stockage et de récupération de la chaleur basse pression 203 et l'échangeur de chaleur à contact indirect 800. Ce flux d'air chaud et comprimé est détendu dans la turbine haute pression 700 produisant de l'électricité via un alternateur, jusqu'à atteindre en sortie une pression de 28 bar et une température de 75°C. Un flux d'eau condensée provenant du moyen de stockage de liquide 501 à une pression de 28 bar et une température de 50°C est réinjecté dans le flux d'air comprimé via le mélangeur 601. Le flux est réchauffé dans le dispositif de stockage et de récupération de la chaleur direct moyenne pression 201 qui libère la chaleur stockée dans les premières particules de stockage de la chaleur durant la phase de compression jusqu'à ce que le flux atteigne une température de 255°C. Ce flux d'air chaud et comprimé est détendu dans la turbine moyenne pression 701 produisant de l'électricité via un alternateur, jusqu'à atteindre en sortie une pression de 5 bar et une température de 70°C. Un flux d'eau condensée provenant du moyen de stockage de liquide 500 à une pression de 6 bar et une température de 50°C est réinjecté dans le flux d'air comprimé via le mélangeur 602. Le flux ainsi formé est réchauffé dans le dispositif de stockage et de récupération de la chaleur direct basse pression 200 qui libère la chaleur stockée dans les premières particules de stockage durant la phase de compression jusqu'à ce que le flux atteigne une température de 245°C. Ce flux d'air chaud et comprimé est détendu dans la turbine basse pression 702 produisant de l'électricité via un alternateur, jusqu'à atteindre en sortie une pression de 1.02 bar et une température de 85°C.

Le rendement du procédé de stockage d'énergie est de 69.9% pour une puissance consommée de 100 MW aux compresseurs. Le débit total d'eau condensée aux trois étages de compression est de 7.5 t/h. La puissance de stockage thermique est de 90.5 MW et la puissance de refroidissement nécessaire est de 11.5 MW. La puissance de refroidissement nécessaire est donc réduite de 3,1MW par rapport au système de la figure 2 de l'art antérieur.

L'intégration de la boucle de refroidissement (ou de réchauffage en phase de détente) de fluide caloporteur associée à l'échangeur de chaleur et au moyen de stockage et de récupération de la chaleur basse pression sur l'étage haute pression permet de diminuer le coût du moyen de stockage et de récupération de la chaleur 203 de 79% par rapport au moyen de stockage et de récupération de la chaleur 202 de la figure 2. De plus, la mise en place du dispositif de stockage et de récupération de la chaleur indirect (comprenant l'échangeur de chaleur sans contact direct, le moyen de stockage et de récupération de la chaleur basse pression et le fluide caloporteur) permet une diminution de coût de 9% par rapport au dispositif moyen de stockage et de récupération de la chaleur (constitué par le moyen de stockage et de récupération de la chaleur 202) du système de la figure 2.

Le système de la figure 6 fonctionne par exemple de la manière suivante :
Les deux premiers étages de compression 3, basse et moyenne pression, sont similaires à ceux du système de la figure 4.

La distinction entre les systèmes des figures 4 et 6 intervient au niveau de l'étage de compression haute pression suite à la compression du flux d'air 20 par un compresseur haute pression 102 d'où il ressort 21 à une température de 250°C et une pression de 117 bar.

Le flux 21 est envoyé vers un échangeur de chaleur à contact indirect 800 permettant l'échange de chaleur entre le flux d'air chaud 21 et un flux de fluide caloporteur 2" basse pression. Le flux 21 est refroidi jusqu'à atteindre une température de 50°C en sortie de l'échangeur de chaleur à contact indirect 800. Le fluide caloporteur se réchauffe par échange thermique jusqu'à atteindre une température de 245°C en 1". Ce flux 1" est alors envoyé vers un moyen de stockage et de récupération de la chaleur basse pression 203 comprenant des deuxièmes particules de stockage de la chaleur échangeant directement de la chaleur avec le fluide caloporteur, le moyen de stockage et de récupération de la chaleur 203 refroidissant le fluide caloporteur jusqu'à une température de 50°C et stockant cette énergie thermique dans les deuxièmes particules de stockage jusqu'à la phase de détente 2. Le fluide caloporteur effectue ainsi une boucle de refroidissement entre le moyen de stockage et de récupération de la chaleur basse pression 203 et l'échangeur de chaleur à contact indirect 800. Le flux 22 est refroidi une nouvelle fois par un moyen de refroidissement 302 jusqu'à atteindre une température de 30°C en sortie, 30°C étant la température de stockage de l'air. Le flux 23 est alors composé d'air et d'eau, issue de l'humidité de l'air, condensée durant les phases de refroidissement dans l'échangeur de chaleur sans contact direct 800 et/ou dans le moyen de refroidissement 302. Cette eau condensée 24 est séparée du flux de la ligne de compression 1 dans un séparateur gaz-liquide 402, opérant à la pression du flux 23, puis envoyée vers un moyen de stockage de liquide 502 sous une pression maintenue de 117 bar.

Le flux d'air comprimé 25 à une pression de 117 bar et une température de 30°C est alors envoyé vers le moyen de stockage d'air comprimé 1000 en attendant la phase de récupération d'énergie 2.

Lorsque l'on veut produire de l'électricité, un flux d'eau condensée provenant du moyen de stockage de liquide 502 à une pression de 117 bar et une température de 30°C est réinjecté dans le flux d'air comprimé 26 sortant du moyen de stockage d'air comprimé 1000 via le mélangeur 600.

Le flux ainsi formé est réchauffé par échange thermique avec le flux 3" de fluide caloporteur basse pression dans l'échangeur à contact indirect 800 jusqu'à ce que le flux atteigne la température de 230°C. Le flux 3" est préalablement réchauffé dans le moyen de stockage et de récupération de la chaleur basse pression 203 qui libère la chaleur stockée dans les deuxièmes particules de stockage de la chaleur durant la phase de compression jusqu'à ce que le flux 3" atteigne une température de 235°C. Le flux de fluide caloporteur est refroidi jusqu'à une température de 35°C en sortie 4" de l'échangeur de chaleur à contact indirect 800 et renvoyé au moyen de stockage et de récupération de la chaleur basse pression 203 pour effectuer une boucle de réchauffage entre le moyen de stockage et de récupération de la chaleur basse pression 203 et l'échangeur de chaleur à contact indirect 800. Le flux d'air chaud et comprimé est détendu dans la turbine haute pression 700 produisant de l'électricité via un alternateur, jusqu'à atteindre en sortie une pression de 28 bar et une température de 80°C. Un flux d'eau condensée provenant du moyen de stockage de liquide 501 à une pression de 28 bar et une température de 50°C est réinjecté dans le flux d'air comprimé via le mélangeur 601. Le flux ainsi formé est réchauffé dans le dispositif de stockage et de récupération de la chaleur direct moyenne pression 201 qui libère la chaleur stockée dans les premières particules de stockage durant la phase de compression jusqu'à ce que le flux atteigne une température de 255°C. Ce flux d'air chaud et comprimé est détendu dans la turbine moyenne pression 701 produisant de l'électricité via un alternateur, jusqu'à atteindre en sortie une pression de 5 bar et une température de 70°C. Un flux d'eau condensée provenant du moyen de stockage de liquide 500 à une pression de 6 bar et une température de 50°C est réinjecté dans le flux d'air comprimé via le mélangeur 602. Le flux ainsi formé est réchauffé dans le dispositif de stockage et de récupération de la chaleur direct basse pression 200 qui libère la chaleur stockée dans les premières particules de stockage de la chaleur durant la phase de compression jusqu'à ce que le flux atteigne une température de 245°C. Ce flux d'air chaud et comprimé est détendu dans la turbine basse pression 702 produisant de l'électricité via un alternateur, jusqu'à atteindre en sortie une pression de 1.02 bar et une température de 85°C.

Le rendement du procédé de stockage d'énergie est de 69.7% pour une puissance consommée de 100 MW aux compresseurs. Le débit total d'eau condensée aux trois étages de compression est de 7.6 t/h. La puissance de stockage thermique est de 93 MW et la puissance de refroidissement nécessaire est de 15 MW.

L'intégration de la boucle de fluide caloporteur associée à l'échangeur de chaleur et au moyen de stockage et de récupération de la chaleur basse pression 203 sur l'étage haute pression permet de diminuer le coût du moyen de stockage et de récupération de la chaleur 203 de 79% par rapport au moyen de stockage et de récupération de la chaleur 202 de la figure 2.

## Revendications

1. Système de stockage et de récupération d'énergie par gaz comprimé comprenant :
- une ligne de compression (1) de gaz avec au moins deux étages de compression (3), chaque étage de compression (3) comprenant un moyen de compression (100, 101, 102) et un dispositif de stockage et de récupération de la chaleur positionné en aval du moyen de compression (100, 101, 102), dans le sens de circulation du gaz comprimé dans l'étage de compression,
- au moins un moyen de stockage de gaz comprimé (1000) situé en sortie de la ligne de compression (1) de gaz pour stocker le gaz comprimé,
- une ligne de détente (2) pour détendre du gaz comprimé stocké dans le moyen de stockage de gaz comprimé (1000), la ligne de détente (2) comprenant au moins deux étages de détente (4) successifs, chaque étage de détente (4) comprenant des conduites et un moyen de détente (700, 701, 702), les conduites de chaque étage de détente étant configurées pour faire circuler le gaz comprimé dans au moins un dispositif de stockage et de récupération de la chaleur des étages de compression (3) de manière à réchauffer le gaz comprimé avant le moyen de détente (700, 701, 702),
dans lequel :
- sur l'un au moins des étages de compression (3), le dispositif de stockage et de récupération de la chaleur consiste en un dispositif de stockage et de récupération de la chaleur direct comprenant au moins un premier moyen de stockage et de récupération de la chaleur (200, 201) comprenant des premières particules de stockage de la chaleur, le premier moyen de stockage et de récupération de la chaleur (200, 201) étant configuré pour échanger de la chaleur directement entre le gaz comprimé et les premières particules de stockage de la chaleur,
le système étant **caractérisé en ce que**:
- chaque dispositif de stockage et de récupération de la chaleur est soit exclusivement direct, soit exclusivement indirect, et
- sur au moins le dernier étage de compression (3), dans le sens de circulation du gaz comprimé, le dispositif de stockage et de récupération de la chaleur consiste en un dispositif de stockage et de récupération de la chaleur indirect comprenant une boucle de refroidissement, la boucle de refroidissement comprenant un échangeur de chaleur (800) sans contact direct pour échanger de la chaleur entre le gaz comprimé et un fluide caloporteur apte à circuler dans la boucle de refroidissement, la boucle de refroidissement comprenant un deuxième moyen de stockage et de récupération de la chaleur (203) comprenant des deuxièmes particules de stockage de la chaleur, le deuxième moyen de stockage et de récupération de la chaleur étant configuré de manière à échanger de la chaleur directement entre les deuxièmes particules de stockage et le fluide caloporteur.

2. Système selon la revendication 1, pour lequel ladite ligne de compression (1) comprend autant d'étages de compression (3) que la ligne de détente (2) comprend d'étages de détente (4), chaque dispositif de stockage et de récupération de la chaleur d'un étage de compression étant utilisé dans l'étage de détente à la pression correspondante, de préférence la ligne de détente (1) et la ligne de compression (2) comprennent chacune trois étages.

3. Système selon l'une des revendications précédentes, pour lequel au moins un étage de compression comprend un premier moyen de refroidissement (300, 301, 302) en aval du dispositif de stockage et de récupération de chaleur, de préférence, ledit moyen de refroidissement (300, 301, 302) comprenant un aéroréfrigérant.

4. Système selon l'une des revendications précédentes, pour lequel la boucle de refroidissement comprend un deuxième moyen de refroidissement (303) en aval, dans le sens de l'écoulement durant la charge du système, du deuxième moyen de stockage et de récupération de chaleur (203), de préférence, ledit deuxième moyen de refroidissement (303) comprenant un aéroréfrigérant.

5. Système selon l'une des revendications précédentes, pour lequel, au moins un étage de compression (3) comprend un moyen de séparation (400, 401, 402) pour séparer le gaz comprimé d'une phase liquide avant que le gaz comprimé n'atteigne l'étage de compression (3) suivant ou le moyen de stockage de gaz comprimé (1000), chaque étage de compression (3) comprenant de préférence un moyen de stockage de liquide (500, 501, 502) pour stocker ladite phase liquide à la pression de l'étage de compression (3).

6. Système selon la revendication 5, pour lequel au moins un étage de détente (4) comprend un moyen de mélange (600, 601, 602) pour mélanger audit gaz comprimé ladite phase liquide sortant d'un des moyens de stockage de liquide (500, 501, 502) des étages de compression (3), le moyen de mélange (600, 601, 602) étant positionné en amont dudit dispositif de stockage et de récupération de chaleur.

7. Système selon l'une des revendications précédentes, pour lequel les conduites d'au moins le premier étage de détente sont configurées pour faire circuler le gaz comprimé dans au moins un dispositif de stockage et de récupération de la chaleur indirect et pour lequel les conduites d'au moins un autre étage de détente sont configurées pour faire circuler le gaz comprimé dans au moins un dispositif de stockage et de récupération de la chaleur direct.

## Patentansprüche

1. System zur Speicherung und Rückgewinnung von Energie unter Verwendung von Druckgas, das Folgendes aufweist:
- eine Gaskompressionslinie (1) mit mindestens zwei Kompressionsstufen (3), wobei jede Kompressionsstufe (3) ein Kompressionsmittel (100, 101, 102) und eine Vorrichtung zur Wärmespeicherung und -rückgewinnung aufweist, die in Strömungsrichtung des Druckgases in der Kompressionsstufe hinter dem Kompressionsmittel (100, 101, 102) angeordnet ist,
- mindestens ein Druckgasspeichermittel (1000), das sich am Ausgang der Gaskompressionslinie (1) befindet, um das Druckgas zu speichern,
- eine Entspannungslinie (2), um das in dem Druckgasspeichermittel (1000) gespeicherte Druckgas zu entspannen, wobei die Entspannungslinie (2) mindestens zwei aufeinander folgende Entspannungsstufen (4) aufweist, wobei jede Entspannungsstufe (4) Leitungen und ein Entspannungsmittel (700, 701, 702) aufweist, wobei die Leitungen jeder Entspannungsstufe ausgelegt sind, das Druckgas durch mindestens eine Vorrichtung zur Wärmespeicherung und -rückgewinnung aus den Kompressionsstufen (3) zirkulieren zu lassen, um das Druckgas vor dem Entspannungsmittel (700, 701, 702) zu erwärmen,
wobei:
- auf mindestens einer der Kompressionsstufen (3) die Vorrichtung zur Wärmespeicherung und -rückgewinnung aus einer Vorrichtung zur direkten Wärmespeicherung und - rückgewinnung besteht, die mindestens ein erstes Mittel zur Wärmespeicherung und -rückgewinnung (200, 201) aufweist, das erste Wärmespeicherpartikel enthält, wobei das erste Mittel zur Wärmespeicherung und -rückgewinnung (200, 201) so ausgelegt ist, dass es Wärme direkt zwischen dem Druckgas und den ersten Wärmespeicherpartikeln austauscht,
wobei das System **dadurch gekennzeichnet ist, dass**:
- jede Vorrichtung zur Wärmespeicherung und - rückgewinnung entweder ausschließlich direkt oder ausschließlich indirekt ist, und
- mindestens in der letzten Kompressionsstufe (3) die Vorrichtung zur Wärmespeicherung und -rückgewinnung in Strömungsrichtung des Druckgases aus einer indirekten Vorrichtung zur Wärmespeicherung und -rückgewinnung besteht, die einen Kühlkreislauf aufweist, wobei der Kühlkreislauf einen Wärmetauscher (800) ohne direkten Kontakt aufweist, um Wärme zwischen dem Druckgas und einem Wärmeträgerfluid auszutauschen, das in der Lage ist, im Kühlkreislauf zu zirkulieren, wobei der Kühlkreislauf ein zweites Mittel zur Wärmespeicherung und
- rückgewinnung (203) aufweist, das zweite Wärmespeicherpartikel enthält, wobei das zweite Mittel zur Wärmespeicherung und -rückgewinnung so ausgelegt ist, dass Wärme direkt zwischen den zweiten Speicherpartikeln und dem Wärmeträgerfluid ausgetauscht wird.

2. System nach Anspruch 1, wobei die Kompressionslinie (1) ebenso viele Kompressionsstufen (3) aufweist, wie die Entspannungslinie (2) Entspannungsstufen (4) enthält, wobei jede Vorrichtung zur Wärmespeicherung und - rückgewinnung einer Kompressionsstufe in der Entspannungsstufe bei dem entsprechenden Druck genutzt wird, wobei vorzugsweise die Entspannungslinie (2) und die Kompressionslinie (1) jeweils drei Stufen aufweisen.

3. System nach einem der vorhergehenden Ansprüche, wobei mindestens eine Kompressionsstufe ein erstes Kühlmittel (300, 301, 302) hinter der Vorrichtung zur Wärmespeicherung und -rückgewinnung aufweist, wobei das Kühlmittel (300, 301, 302) vorzugsweise einen Luftkühler aufweist.

4. System nach einem der vorhergehenden Ansprüche, wobei der Kühlkreislauf ein zweites Kühlmittel (303) aufweist, das während der Belastung des Systems in Strömungsrichtung hinter dem zweiten Mittel zur Wärmespeicherung und -rückgewinnung (203) angeordnet ist, wobei das zweite Kühlmittel (303) vorzugsweise einen Luftkühler aufweist.

5. System nach einem der vorhergehenden Ansprüche, wobei mindestens eine Kompressionsstufe (3) ein Trennmittel (400, 401, 402) zum Trennen des Druckgases von einer flüssigen Phase aufweist, bevor das Druckgas die nächste Kompressionsstufe (3) oder das Druckgasspeichermittel (1000) erreicht, wobei jede Kompressionsstufe (3) vorzugsweise ein Flüssigkeitsspeichermittel (500, 501, 502) zum Speichern der flüssigen Phase auf dem Druck der Kompressionsstufe (3) aufweist.

6. System nach Anspruch 5, wobei mindestens eine Entspannungsstufe (4) ein Mischmittel (600, 601, 602) aufweist, um das Druckgas mit der aus einem der Flüssigkeitsspeichermittel (500, 501, 502) der Kompressionsstufen (3) austretenden flüssigen Phase zu mischen, wobei das Mischmittel (600, 601, 602) vor der Vorrichtung zur Wärmespeicherung und -rückgewinnung angeordnet ist.

7. System nach einem der vorhergehenden Ansprüche, wobei die Leitungen mindestens der ersten Entspannungsstufe dazu ausgebildet sind, das Druckgas durch mindestens eine indirekte Vorrichtung zur Wärmespeicherung und -rückgewinnung zirkulieren zu lassen, und wobei die Leitungen mindestens einer anderen Entspannungsstufe dazu ausgebildet sind, das Druckgas durch mindestens eine direkte Vorrichtung zur Wärmespeicherung und -rückgewinnung zirkulieren zu lassen.

## Claims

1. Compressed gas energy storage and recovery system comprising:
- a gas compression line (1) with at least two compression stages (3), each compression stage (3) comprising a compression means (100, 101, 102) and a heat storage and recovery device positioned downstream of the compression means (100, 101, 102), in the direction of circulation of the compressed gas in the compression stage,
- at least one compressed-gas storage means (1000) located at the outlet of the gas compression line (1) for storing the compressed gas,
- an expansion line (2) for expanding the compressed gas stored in the compressed-gas storage means (1000), the expansion line (2) comprising at least two successive expansion stages (4), each expansion stage (4) comprising pipes and an expansion means (700, 701, 702), the pipes of each expansion stage being configured to circulate the compressed gas in at least one heat storage and recovery device of the compression stages (3) so as to heat the compressed gas before the expansion means (700, 701, 702),
wherein:
- in at least one of the compression stages (3), the heat storage and recovery device consists of a direct heat storage and recovery device comprising at least one first heat storage and recovery means (200, 201) comprising first heat storage particles, the first heat storage and recovery means (200, 201) being configured to exchange heat directly between the compressed gas and the first heat storage particles,
the system being **characterized in that**:
- each heat storage and recovery device is either exclusively direct or exclusively indirect, and
- in at least the last compression stage (3), in the direction of circulation of the compressed gas, the heat storage and recovery device consists of an indirect heat storage and recovery device comprising a cooling loop, the cooling loop comprising a heat exchanger (800) without direct contact for exchanging heat between the compressed gas and a heat-transfer fluid that can circulate in the cooling loop, the cooling loop comprising a second heat storage and recovery means (203) comprising second heat storage particles, the second heat storage and recovery means being configured so as to exchange heat directly between the second storage particles and the heat-transfer fluid.

2. System according to Claim 1, wherein said compression line (1) comprises as many compression stages (3) as the expansion line (2) comprises expansion stages (4), each heat storage and recovery device of a compression stage being used in the expansion stage at the corresponding pressure, preferably the expansion line (1) and the compression line (2) each comprise three stages.

3. System according to either of the preceding claims, wherein at least one compression stage comprises a first cooling means (300, 301, 302) downstream of the heat storage and recovery device, preferably, said cooling means (300, 301, 302) comprising an air cooler.

4. System according to one of the preceding claims, wherein the cooling loop comprises a second cooling means (303) downstream, in the direction of flow during the charging of the system, of the second heat storage and recovery means (203), preferably, said second cooling means (303) comprising an air cooler.

5. System according to one of the preceding claims, wherein at least one compression stage (3) comprises a separation means (400, 401, 402) for separating the compressed gas from a liquid phase before the compressed gas reaches the next compression stage (3) or the compressed-gas storage means (1000), each compression stage (3) preferably comprising a liquid storage means (500, 501, 502) for storing said liquid phase at the pressure of the compression stage (3).

6. System according to Claim 5, wherein at least one expansion stage (4) comprises a mixing means (600, 601, 602) for mixing said liquid phase leaving one of the liquid storage means (500, 501, 502) of the compression stages (3) with said compressed gas, the mixing means (600, 601, 602) being positioned upstream of said heat storage and recovery device.

7. System according to one of the preceding claims, wherein the pipes of at least the first expansion stage are configured to circulate the compressed gas in at least one indirect heat storage and recovery device and wherein the pipes of at least one other expansion stage are configured to circulate the compressed gas in at least one direct heat storage and recovery device.
